# EUROPEAN PATENT APPLICATION

(11) **EP 3 819 970 A1**
(43) Date of publication of application: **12.05.2021**
(21) Application number: 19830824.9
(22) Date of filing: 03.02.2019
(51) Int. Cl.: H01M 8/0258

(54) **FUEL CELL HAVING FLUID GUIDE FLOW PATH AND MANUFACTURING METHOD THEREFOR**

(30) Priority: 04.07.2018 WO PCT/CN2018/094449
(71) Applicant: SHANGHAI SUNBRIDGE POWER TECHNOLOGIES CO., LTD, Shanghai 201806 (CN)
(72) Inventor: CHENG, Jianhua, Shanghai (CN)
(74) Representative: EP&C
(86) International application number: PCT/CN2019/074682
(87) International publication number: WO 2020/007048

(57) **Abstract**

A fuel cell unit, comprising a first separator and a second separator that are opposite to each other, and membrane electrode assemblies stacked between the first separator and the second separator, wherein each membrane electrode assembly comprises a catalyst coating membrane, and a first gas diffusion layer and a second gas diffusion layer respectively provided at the two sides of the catalyst coating membrane. The fuel cell unit further comprises a gas guide flow path located between the separator and the gas diffusion layer that are opposite to each other, and a coolant flow path located between the first separator and/or the second separator and another fuel cell unit, wherein the gas guide flow path is attached on the surface of the gas diffusion layer and/or the opposite separator, and the coolant flow path is attached on the outside surface of the first separator and/or the second separator.

## Description

### Field of the Invention

The present invention relates to a fuel cell configured by stacking a plurality of fuel cell units, having the electrolyte, the anode side catalyst layer, the cathode side catalyst layer, the anode side gas diffusion layer, the cathode side gas diffusion layer, all of which are sandwiched by the anode side separator and the cathode side separator. Especially, it relates to the fuel cell having a gutter-shaped gas guide path located at the intermediate position of the separator and the gas diffusion layer and a gutter-shaped cooling medium path located at the intermediate position of the two adjacent separators.

### Description of the Related Art

For example, the polymer electrolyte fuel cell (PEFC) is provided with the electrode membrane assembly (CCM, MEA) that arrange the anode electrode on one face of the electrolyte membrane made of polymer ion exchange membrane, and the cathode electrode on the other face, respectively. MEA is sandwiched between a pair of separators to constitute the power-generating cell. Normally, the fuel cell stacks a pre-determined number of power-generating cells, for instance, it is assembled to the fuel cell vehicle as the fuel cell stack for vehicles. Normally, several tens to several hundred of power-generating cells are stacked in the fuel cell, to be used as the fuel cell stack for vehicles, for example.

Conventionally, the fuel cell provides the fuel gas guide path opposing the anode electrode, within the face of one separator, and provides an oxidizing gas guide path opposing the cathode electrode, within the face of the other separator. And a path for the cooling medium is formed between the anode side separator and the cathode side separator.

Especially, many researches and developments of the fuel cell having the high-power output are being conducted, for promoting a highly efficient, a highly durable, and a small-sized fuel cell, at a low cost. It is essential to establish the technology for manufacturing a high-quality fuel cell safely at a low cost based on the market needs.

### Prior Art Documents

### Patent Document

Patent Document 1: Japanese Laid-open Application Publication No. 2016-58288
Patent Document 2: Japanese Laid-open Application Publication No. 2006-120621
Patent Document 3: Japanese Laid-open Application Publication No. 2006-339089

### Contents of the Invention

### Problems to be solved by the Invention

According to the fuel cell disclosed in the patent document 1, the separator having a gutter-shaped path with different rib heights is formed by press molding of the metallic plate. Since the ribs are formed using the same metallic plate as the main body separator, there are problems accompanying this process, such as deflected separator accompanying the process, separator cracking and strain hardening accompanying the fine processing, and bending deformation of the separators. The die and mold may end up bending when the gas guide path is manufactured by pressing process of the metallic plate. Further, under the situation of design change, with the metallic molding process, re-designing of die and mold is technically difficult and costly.

According to the fuel cell disclosed in the patent document 2, the gas diffusion layer and the gas guide path are integrated by the vapor development process. Such a gas diffusion layer formed by vapor development is being integrated with the gas guide path, therefore, it is disadvantage in terms of cost under the situation such as the need for changing the path design for different specification. Further, the vapor development takes much time to process so that it is not suitable for the mass production.

According to the fuel cell disclosed in the patent document 3, the gas guide path is formed on the porous gas diffusion layer instead of the separator. Such a gas diffusion layer integrates the gas guide path by using a mold. The molding process is disadvantage in terms of costs under the situation such as the need for changing the channel design for different specification. Under such process as molding, the cost reduction attempted by making use of the pre-existing structural components cannot be applied.

The purpose of the present invention is to provide a fuel cell that can be manufactured at high efficiency and low cost. Such a fuel cell can be achieved by forming a cooling medium path having a dense and highly conductive carbon-based coating material between the adjacent separators. Also, the fuel cell can be achieved by forming a gas guide path having a dense and/or high porosity structure made from highly conductive carbon-based coating material between the separator and the gas diffusion layer.

Also, the present invention can be achieved by supplying a fuel cell unit provided with the fluid guide channel including the cooling medium path and the gas guide path that can suppress the complexity in the manufacturing process by making the fluid guide channel formation easy.

Mainly, the purpose of the present invention is aiming to acquire the optimized flexible guide path design and the high output density and the high capacity (high energy density) fuel cell made from the fuel cell units providing with a CCM sheet (catalyst layer attached electrolyte membrane), a pair of gas diffusion layers and a pair of separators.

### Means to solve the problems

In order to attain the above objectives, the present invention provides the fuel cell manufactured as follows.

According to one aspect of the present invention, a fuel cell unit of the fuel cell having a plurality of fuel cell units, comprising:
a first separator and a second separator that are opposing to each other; and
a membrane electrode assembly stacked between the first and the second separators;
   wherein the electrode membrane assembly includes a catalyst coated membrane, a first gas diffusion layer and a second gas diffusion layer respectively provided to a first side and a second side of the catalyst coated membrane;
the fuel cell unit further comprises a gas guide path between the first separator and the first gas diffusion layer and/or between the second separator and the second gas diffusion layer;
   wherein the gas guide path is adhered to a surface of the gas diffusion layer facing the corresponding separator and/or adhered to a surface of the separator facing the corresponding gas diffusion layer, for forming the fluid guide path; and
the fuel cell comprises a cooling medium path located between the first separator of the adjacent fuel cell unit and the separator;
wherein the cooling medium path is adhered to a surface of the second separator facing the first separator and/or a surface of the first separator facing the second separator, for forming the fluid guide path.

According to another aspect of the present invention, the cooling medium path is adhered to the outer surface of the first separator and/or the second separator, wherein the gas guide path is adhered to the inner surface of the first separator and/or the second separator.

According to another aspect of the present invention, the cooling medium path is adhered to the outer surface of the first separator and/or the second separator, wherein the gas guide path is not adhered to the inner surface of the first separator and/or the second separator.

According to another aspect of the present invention, the cooling medium path is adhered to the outer surface of the first separator and/or the second separator, wherein the gas guide path is adhered to the surface of the gas diffusion layer corresponding to the inner surface of the first separator and/or the second separator.

According to another aspect of the present invention, the fluid guide path is formed on the corresponding separator surface and/or the gas diffusion layer surface, by using an adhering method, a printing method, a dispensing method, an injecting method, and a transferring method.

According to another aspect of the present invention, the separator surface(s) and/or the gas diffusion layer surface(s) for adhering the fluid guide path(s) are/is smooth.

According to another aspect of the present invention, the fluid guide path is respectively formed on the separator and the gas diffusion layer.

According to another aspect of the present invention, the fluid guide path is made of a material different for the separator and/or the gas diffusion layer.

According to another aspect of the present invention, the fluid guide path material is a highly conductive material.

According to another aspect of the present invention, the gas guide path includes a rib portion and a channel portion, for controlling the reaction fluid flows and the fluid permeability.

According to another aspect of the present invention, the rib portion of the gas guide path includes a dense structure for hindering the permeation of the reaction fluid between the adjacent channel portions and the permeation of the reaction fluid to the corresponding gas diffusion layer via the rib portion, or, a high porosity structure for allowing permeation of the reaction gas between the adjacent channel portions and the permeation of the reaction fluid to the corresponding gas diffusion layer via the rib portion.

According to another aspect of the present invention, the gas guide path further includes a base portion carrying the rib portion, wherein the base portion has a dense structure for hindering the permeation of the reaction fluid to the corresponding gas diffusion layer via the base portion, or, a high porosity structure for allowing the permeation of the reaction fluid to the corresponding gas diffusion layer via the base portion.

According to another aspect of the present invention, the rib portion of the gas guide path is formed on either one of the opposing surfaces of the separator or the gas diffusion layer, the upper faces of the some of the rib portion come in contact with the other one of the opposing surfaces of the separator or the gas diffusion layer, and the upper faces of some other rib portion is provided with a space between the other one of the opposing surfaces of the separator or the gas diffusion layer.

According to another aspect of the present invention, the rib portion of the gas guide path is formed on either one of the opposing surfaces of the separator or the gas diffusion layer, and the upper face of the rib portion comes in contact with the other one of the opposing surfaces of the separator or the gas diffusion layer, and wherein the rib portion of the cooling medium path is formed on either one of the opposing surfaces of the first separator or the second separator, and the upper face of the rib portion come in contact with the other one of the opposing surfaces of the separator.

According to another aspect of the present invention, the rib portion of the gas guide path is formed on the opposing surfaces of the separator and the gas diffusion layer, and the upper faces of the rib portions corresponding to the opposing separator and the gas diffusion layer are adjoined; and wherein the rib portion of the cooling medium path is formed on the opposing surfaces of the first separator and second separator, and the upper faces of the rib portions corresponding to the opposing first separator and the second the second separator are adjoined.

According to another aspect of the present invention, the gas guide path ribs are formed on the opposing surfaces of the separator and the gas diffusion layer, and, the rib portion on the separator comes in contact with the surface of the gas diffusion layer, and the rib portion on the gas diffusion layer comes in contact with the surface of the separator; and wherein the cooling medium path ribs are formed on the opposing surfaces of the first separator and the second separator, and, the rib portion on the first separator comes in contact with the surface of the second separator, and the rib portion of the second separator comes in contact with the surface of the first separator.

According to another aspect of the present invention, the adjoined rib portions in pairs have the adjoined interface size which is less than the contact face of the rib portion with the separator or the gas diffusion layer.

According to another aspect of the present invention, the adjoined rib portions in pairs have the adjoined interface size which is greater than the size of contacting face of the rib portion with the separator or the gas diffusion layer.

According to another aspect of the present invention, the material of the rib portion is tucked into the interface of the gas diffusion layer.

According to another aspect of the present invention, the rib portion and the base portion of the gas guide path are formed by the adhering method throughout.

According to another aspect of the present invention, the upper face of the rib of the fluid guide path and a part or all surface of the channel base are processed to have the hydrophilic property.

According to another aspect of the present invention, a manufacturing method of the fuel cell unit for forming a cooling medium path and a gas guide path by using an electrode membrane assembly including a catalyst coated membrane, a first gas diffusion layer and a second gas diffusion layer respectively provided to a first side and a second side of the catalyst coated membrane, and by using a first separator and a second separator, comprising the steps of:
the cooling medium path which is formed by adhering the cooling medium path rib to the outer surface of the first separator and the second separator; and
contacting the cooling medium path rib adhered to the first separator and/or the second separator to the surface of the second separator and/or surface of the first separator of the adjacent fuel cell unit; and
the gas guide path which is formed by adhering the gas guide path rib to the inner surface of the first gas diffusion layer and/or the second gas diffusion layer;
adhering the gas guide path rib to the inner surface of the first separator and/or the second separator;
pressing the first separator to the outer surface of the first gas diffusion layer; and
pressing the second separator to the outer surface of the second gas diffusion layer.

According to another aspect of the present invention, the manufacturing method of fuel cell unit for forming the cooling medium path and the gas guide path on the corresponding separator surface and/or the gas diffusion layer surface by using the adhering method, the printing method, the dispensing method, the spraying method or the transferring method.

According to another aspect of the present invention, the manufacturing method of fuel cell unit for smoothing the separator surface and/or the gas diffusion layer surface(s) to adhere the cooling medium path and the gas guide path.

According to another aspect of the present invention, the manufacturing method of fuel cell unit, wherein the cooling medium path material and the gas guide path material are different for the separator and/or the gas diffusion layer.

According to another aspect of the present invention, the manufacturing method of fuel cell unit, wherein the cooling medium path and the gas guide path are made from materials having high conductivity.

According to another aspect of the present invention, the manufacturing method of fuel cell unit, wherein the cooling medium path and the gas guide path include the rib portion and the channel portion for controlling the reaction fluid flow and the fluid permeability.

According to another aspect of the present invention, the manufacturing method of fuel cell unit, wherein the gas guide path includes a base portion carrying the rib portion.

According to another aspect of the present invention, the manufacturing method of fuel cell unit, for forming the rib portion and the rib base of the gas guide path by the adhering method throughout.

According to another aspect of the present invention, the manufacturing method of fuel cell unit, for including a hydrophilic processing applied to the upper face of the rib portion of the gas guide path and a part or all the surface of the channel base portion of the fluid guide path.

### Brief Description of the Drawings

The characteristics and functions of the present invention will further be explained based on the following embodiments and drawings.
Fig. 1 illustrates a perspective view of the stacked-type fuel cell according to the embodiments of the present invention.
Fig. 2 illustrates a perspective view partially showing one example of 3-dimensional structure of the fluid guide path according to the embodiments of the present invention.
Figs. 3 illustrate the schematic drawings partially showing examples of the fuel cell unit for various embodiments of the present invention.
Fig. 3 (A) illustrates a fuel cell unit for the first embodiment.
Fig. 3 (B) illustrates a fuel cell unit for the second embodiment.
Fig. 3 (C) illustrates a fuel cell unit for the third embodiment.
Figs. 3 (D) (E) illustrate a fuel cell unit for the fourth embodiment.
Fig. 3 (F) illustrates a fuel cell unit for the fifth embodiment.
Figs. 4 illustrate the perspective views showing three shapes of the fluid guide path formed on the surface of the base materials 4, 5, 6 and 7 according to the embodiments of the present invention.
Fig. 4 (A) illustrates a shape of the fluid guide path having a rib's cross-sectional shape of rectangle.
Fig. 4 (B) illustrates a shape of the fluid guide path having a rib's cross-sectional shape of trapezoid.
Fig. 4 (C) illustrates a shape of the fluid guide path having a rib's cross-sectional shape of trapezoid with arc.

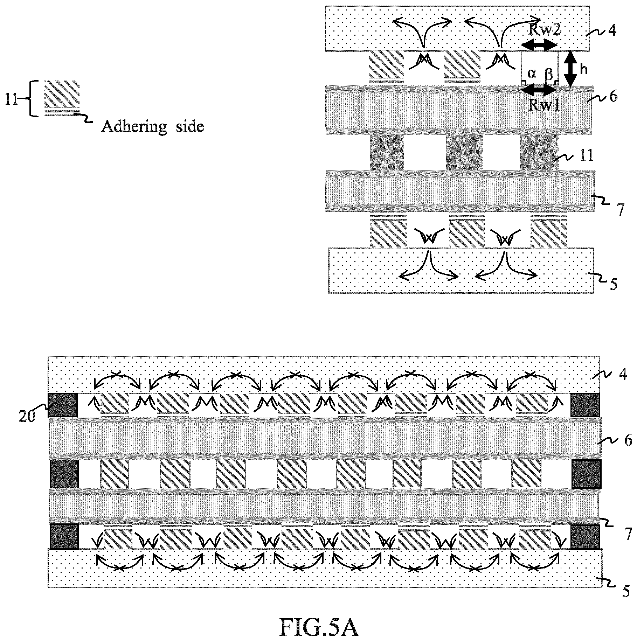

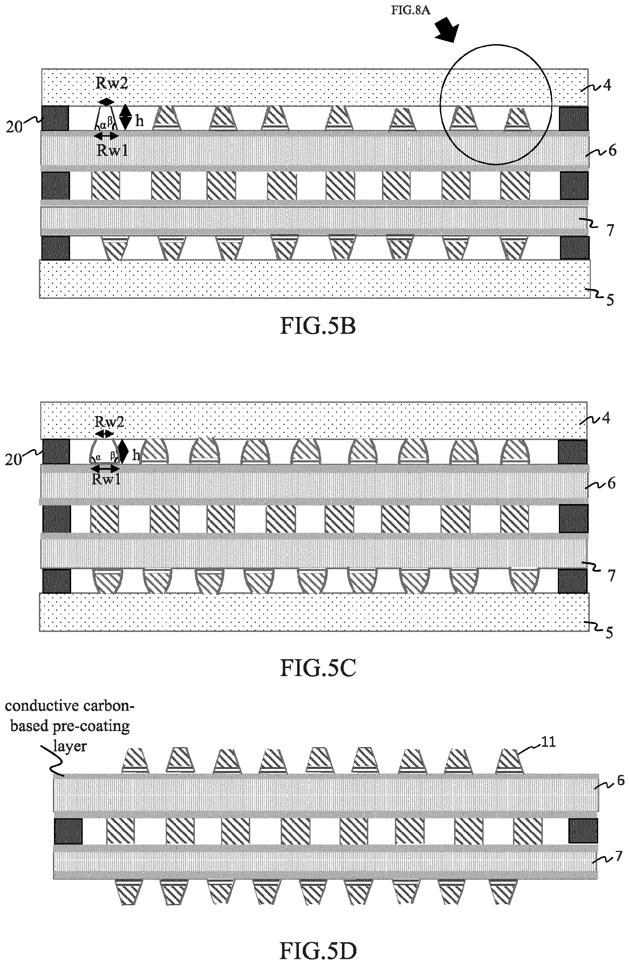

Figs. 5 illustrate the gas guide path structures formed by butting and adjoining the gas guide path rib 11 formed by adhering the gas guide path rib 11 to the surface the separator 6, 7 facing the gas diffusion layer 4, 5, adjoined so that the gas guide rib 11 comes in contact with the gas diffusion layer4, 5; and the cooling medium path structure formed by adjoining the cooling medium path rib 11 adhered to one side of the surfaces of the anode side separator 6 and/or the cathode side separator 7 to come in contact with the anode side separator 6 and the cathode side separator 7, according to the first embodiment of the present invention.
Fig. 5 (A) illustrates the cross-sectional drawing of the fluid guide path in which the rib's cross-sectional shape 11 is rectangle.
Fig. 5 (B) illustrates the cross-sectional drawing of the fluid guide path in which the rib's cross-sectional shapes 11 are trapezoid and rectangle.
Fig. 5 (C) illustrates the cross-sectional drawing of the fluid guide path in which the rib's cross-sectional shapes 11 are trapezoid with arc and rectangle.
Fig. 5 (D) illustrates one example of the cross-sectional drawing of the fluid guide path including the cooling medium path and the gas guide paths.

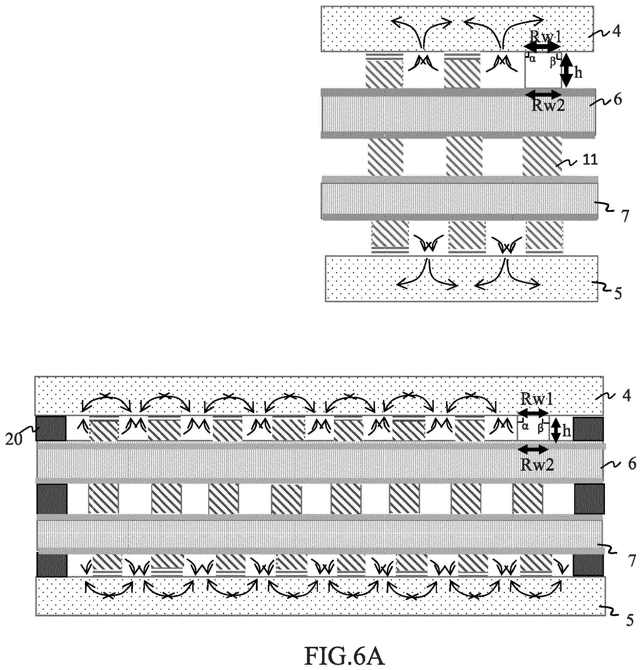

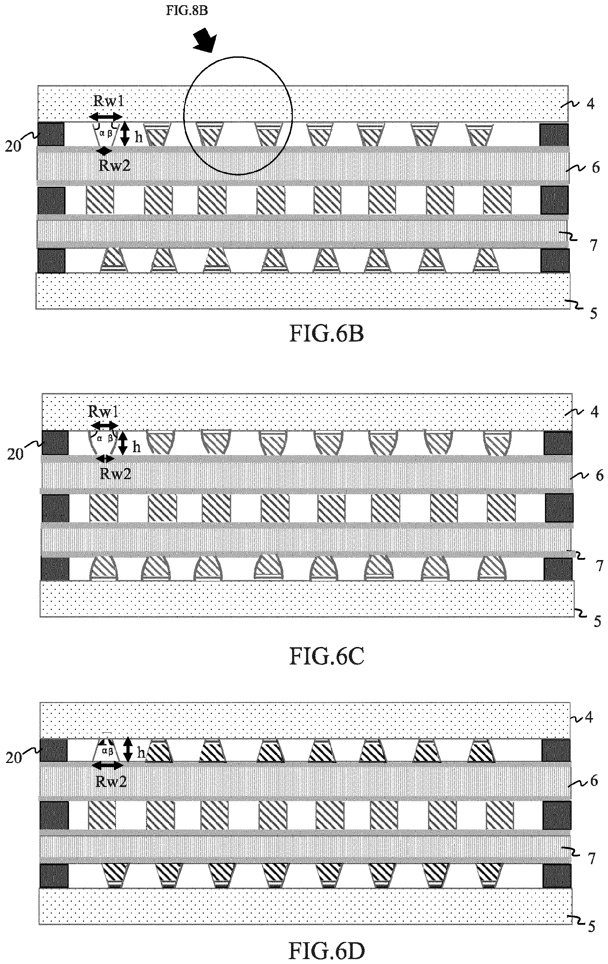

Figs. 6 illustrate the gas guide path structures formed by butting and adjoining the gas guide path rib 11 formed by adhering the gas guide path rib 11 to the surface the gas diffusion layer 4, 5 facing the separator 6, 7, adjoined so that the gas guide path rib 11 comes in contact with the separator 6, 7; and the cooling medium path structure formed by adjoining the cooling medium path rib 11 adhered to one side of the surfaces of the anode side separator 6 and/or the cathode side separator 7 to come in contact with the anode side separator 6 and the cathode side separator 7, according to the second embodiment of the present invention.
Fig. 6 (A) illustrates the cross-sectional drawing of the fluid guide path in which the rib's cross-sectional shape 11 is rectangle.
Fig. 6 (B) illustrates the cross-sectional drawing of the fluid guide path in which the rib's cross-sectional shapes 11 are inverted trapezoid and rectangle.
Fig. 6 (C) illustrates the cross-sectional drawing of the fluid guide path in which the rib's cross-sectional shapes 11 are inverted trapezoid with arc and rectangle.
Fig. 6 (D) illustrates a cross-sectional drawing of the fluid guide path in which the rib's cross-sectional shape 11 is rectangle and inverted trapezoid.
Figs. 7 illustrate the gas guide path structures formed by adjoining the gas guide paths that are formed by adhering the gas guide path to the surface the separator 6, 7 facing the gas diffusion layer 4, 5, and separately adhering the gas guide path to the gas diffusion layer 4, 5 facing the separator 6, 7, according to the third embodiment of the present invention.
Fig. 7 (A) illustrates the cross-sectional drawing of the fluid guide path in which the rib's cross-sectional shape 11 is rectangle.
Fig. 7 (B) illustrates a cross-sectional drawing of the fluid guide path in which the rib's cross-sectional shapes 11 are trapezoid and rectangle.
Fig. 7 (C) illustrates a cross-sectional drawing of the fluid guide path in which the rib's cross-sectional shapes 11 are trapezoid with arc and rectangle.
Figs. 8 illustrate the enlarged views showing the states of the gas guide path rib 11 formed and sandwiched at the intermediate position of the separator 6, 7 and the gas diffusion layer 4, 5, according to the embodiments of the present invention.
Fig. 8 (A) illustrates the stress distribution when the trapezoid-shaped gas guide path rib 11 of the first embodiment encounter the gas diffusion layer 4, 5.
Fig. 8 (B) illustrates the stress distribution at the gas diffusion layer 4, 5 side when the trapezoid-shaped gas guide path rib 11 of the second embodiment encounter the separator 6, 7.
Figs. 9 illustrate the other modification example 1 of the present invention.
Fig. 9 (A) illustrates one example of installing minute holes to the gas guide path rib 11 and the cooling medium path rib 11 for the third embodiment.
Fig. 9 (B) illustrates one example of installing minute holes to the gas guide path rib and the cooling medium path rib 11 for the first and second embodiments.
Figs. 10 (A), (B), (C) and (D) are illustrations for schematically explaining the sequence order of the head-pushing method, the head-butting method and the biting method for the fluid guide paths according to the embodiments of the present invention.
Figs. 11 illustrate the views for explaining the differences in the channel width Cw depending on the arrangement of the fluid guide path rib 11, according to the embodiments of the present invention.
Fig. 11 (A) illustrates partially the fluid guide path rib 11 for the first embodiment.
Fig. 11 (B) illustrates partially the fluid guide path rib 11 for the second embodiment.
Fig. 11 (C) illustrates partially the fluid guide path rib 11 for the third embodiment.
Fig. 12 illustrates the examples of the cross-sectional shapes of the fluid guide path ribs 11 applied to the embodiments of the present invention: the column A includes the rib's cross-sectional shapes 11 for the left-right symmetric fluid guide path; the column B includes the rib's cross-sectional shapes 11 for the left-right asymmetric fluid guide path in which the shape has either one of the inner angles α(alpha) or β (beta) is a right angle; and the column C includes the rib's cross-sectional shapes 11 for the left-right asymmetric fluid guide path.
Figs. 13 illustrate the structures of fluid guide paths formed by combining various cross-sectional shapes of the gas guide path ribs 11 of Fig. 12, according to the third embodiment.
Fig. 13 (A) illustrates the case of alternately adhering the left-right asymmetric fluid guide path ribs 11.
Fig. 13 (B) illustrates the case of uniformly adhering the left-right asymmetric fluid guide path ribs 11.
Fig. 13 (C) illustrates the case of alternately adhering the left-right symmetric fluid guide path rib 11 and the left-right asymmetric fluid guide path ribs 11.
Fig. 13 (D) illustrates the case of adhering the left-right symmetric fluid guide path ribs 11 with different sizes to the first base material (the gas diffusion layer 4, 5) and the second base material (the separator 6, 7).
Fig. 13 (E) illustrates the case of adhering by overlapping the left-right symmetric trapezoid fluid guide path ribs 11 with one another.
Fig. 13 (F) illustrates the case of providing the pre-coating layer in advance to the face of the second base material (the separator 6, 7) side before adhering the left-right symmetric trapezoid fluid guide path rib 11 thereon.
Fig. 14 illustrates an example of the fluid guide path structure formed by the biting method for the third embodiment of the present invention.
Figs. 15 illustrate the examples of the fluid guide path structures for the third embodiment of the present invention.
Fig. 15 (A) illustrates a fluid guide path structure having a volcano-type rib's cross-sectional shape formed by the head-pushing method based on the first embodiment.
Fig. 15 (B) illustrates a fluid guide path structure having a tower-type rib's cross-sectional shape formed by the head-butting method based on the third embodiment.
Figs. 16 (A) and (B) illustrate variations of the fluid guide path structures formed based on the first embodiment of the present invention.

### Reference Signs

1 electrolyte membrane
2 anode side catalyst layer
3 cathode side catalyst layer
4 anode side gas diffusion layer (the first base material)
5 cathode side gas diffusion layer (the first base material)
6 anode side separator (the second base material)
7 cathode side separator (the second base material)
8 cell unit
9 cell stack structure body
11 rib of fluid guide path
12 channel of fluid guide path
13 base of fluid guide path
101, 102 endplate
Rw1 rib width at base material side
Rw2 rib top width
h rib height
Cw channel width
α(alpha), β(beta) inner angles formed by rib interface and the rib side face
S channel pitch

### Preferred Embodiments of the Invention

The preferred embodiments for the fuel cell of the present invention are exemplified and described in detail with reference to the drawings. In the description below, the polymer electrolyte fuel cell (PEFC) is taken as the example. However, the materials, dimensions, shapes, angles and the relative layout positions of the components mentioned in the embodiments of the present invention are not particularly limited to the scope of the present invention mentioned in this patent specification unless otherwise stated in this patent specification document.

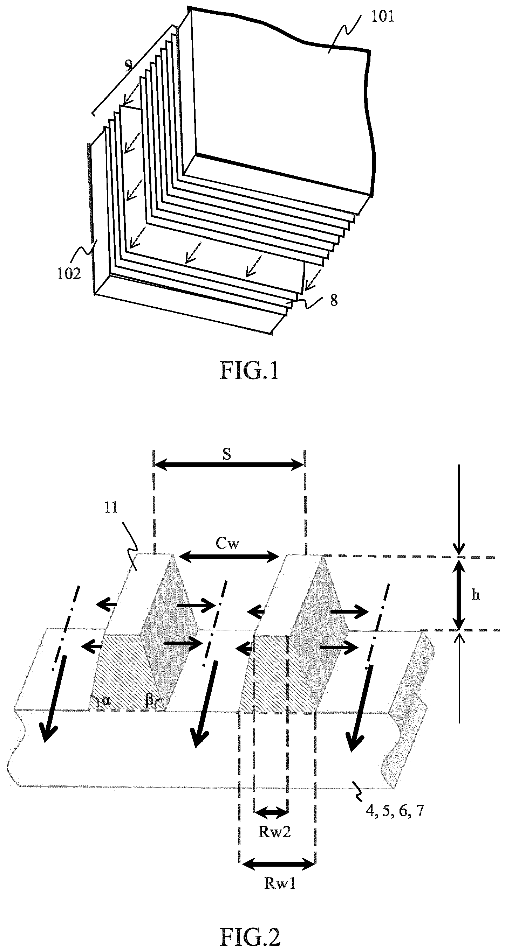

Hereinbelow, the embodiments of the present invention will be described in detail by referring to the appropriate drawings. Among the referred drawings, Fig. 1 shows an external view of the fuel cell. As shown in Fig. 1, both edges of the cell stack structure body 9 formed by stacking the fuel cell units 8 are tightly held by the endplates 101 and 102 functioning as the holding plates. The fuel cell laminates a plurality of fuel cell units 8, and the collector plate for collecting the electrical current generated by the fuel cell units 8, an insulating plate for insulating with fuel cell units 8, and the endplates 101, 102, which are attached to the both side of the laminating body, to be fastened altogether by using a tie rod.

### [Fuel cell mechanism]

The mechanism of the fuel cell is described below. Fuel fluid is supplied to an anode (called fuel electrode) and an electron is removed from the supplied fuel fluid, with an aid of the catalyst, and the electron is transferred to the external circuit. Here, the hydrogen is converted to hydrogen ion (called proton). Meanwhile, an oxygen is supplied to a cathode (called air electrode). The oxygen reacts with the proton permeating through the electrolyte membrane and the electron from the external circuit to generate water. Typically, the fuel fluid is gas such as hydrogen.

The fuel cell of the present invention, as one example, is the polymer electrolyte fuel cell mentioned below, that is, the catalyst coated membrane (CCM) is configured by using a polymer electrolyte as the electrolyte membrane 1, and the anode side catalyst layer 2 (the first catalyst layer) and the cathode side catalyst layer 3 (the second catalyst layer) are attached to this electrolyte membrane 1. The anode side catalyst layer 2 attaches the anode side separator 6 (the first separator) and sandwiches the anode side gas diffusion layer 4 (the first gas diffusion layer). The cathode side catalyst layer 3 attaches the cathode side separator 7 (the second separator) and sandwiches the cathode side gas diffusion layer 5. The fuel cell unit 8 is configured accordingly, and the polymer electrolyte fuel cell is acquired by stacking a plurality of fuel cell units 8.

The structural components of the fuel cell unit 8 and their associated elements pertaining to the embodiments of the present invention can be formed by using the known base materials. Also, the structural components of the fuel cell unit 8 and their associated elements can be manufactured by using the conventional techniques. The present invention does not particularly restrict the known base materials and the conventional techniques. Hereinafter, each structural component will be explained briefly.

### [Electrolyte membrane]

In general, as for the electrolyte membrane 1 serving as the electricity generating unit, both the fluorine-based and hydrocarbon-based polymer electrolyte membranes can preferably be used. To name some of the key functional features desired of the electrolyte membrane 1, it should have a good proton conductivity, a favorable impermeability of reaction gases, an electron insulation property, and a high tolerance to physical and chemical properties. The electrolyte membrane used in the present invention is not particularly limited as long as it is excellent in ion (proton) permeability and made of material not allowing the electrical current to pass through.

### [Catalyst layer]

An anode fuel cell reaction and a cathode fuel cell reaction occur on the anode side catalyst layer 2 and the cathode side catalyst layer 3 arranged at the both sides of the electrolyte membrane 1. Dissociation of hydrogen into proton and electron (hydrogen oxidation reaction) is promoted at the anode side catalyst layer 2. Reactions for forming water from the proton, the electron and the oxygen (oxygen reduction reaction) are promoted at the cathode side catalyst layer 3. The catalyst electrode used in the present invention is not particularly limited, and the commonly used conventional catalyst electrode can be used.

### [Gas diffusion layer]

The anode side gas diffusion layer 4 is positioned between the CCM sheet (not illustrated) and the anode side separator 6. The cathode side gas diffusion layer 5 is positioned between the CCM sheet and the cathode side separator 7. The CCM sheet is a generic term of a CCM (catalyst coated membrane) holder film for holding the electrolyte membrane 1, the anode side catalyst layer 2 and the cathode side catalyst layer 3. The gas diffusion layers 4, 5 are the functional layer for efficiently guiding the fuel gas and the oxidizing gas required in the chemical reactions along the plane direction of the electrolyte membrane 1. That is, the gas guide path is provided to enable the fuel gas to be diffused to the anode side gas diffusion layer 4, and a gas guide path is provided to enable the oxidizing gas to be diffused to the cathode side gas diffusion layer 5. The gas diffusion layer of the present invention is not particularly limited, as long as it has the gas permeability and can collect the generated electricity, and a pre-existing product of the gas diffusion layer used in the conventional fuel cell can be applied.

### [Separator]

Separator is a metallic sheet for separating the fuel cell units 8 serving as a power generating body. The electrolyte membrane 1 required for generating power, the anode side catalyst layer 2, the cathode side catalyst layer 3, the anode side gas diffusion layer 4, and the cathode side gas diffusion layer 5 are accommodated between a pair of separators 6, 7. Also, the separator 6, 7 functions as a current collector for collecting the generated power.

The separator 6, 7 is made of a thin metallic sheet having the gas blocking property, the chemical stability, and the electron conductivity. As separators, for example, various thin metal sheets, metal foils or metal films, such as, aluminum, copper, and stainless can be used. Such thin metal sheets, metal foils or metal films are preferably made from conductive materials having the high resistance to corrosion and the mechanical strength. Further, the metal sheets, metal foils or thin metal foils are preferably coated, and their surfaces are processed by surface coating, coating, and physical and chemical surface processing, for increasing even more the conductivity, the resistance to corrosion, and the mechanical strength.

### [Fluid guide path]

The fluid guide path has two types, namely: the gas guide path and the cooling medium path. Further, the gas guide path includes 2 kinds, namely: the fuel gas guide path (anode) and the oxidizing gas guide path (cathode). The guide path for supplying the fluids to the fuel cell is comprised of a convex portion and a concave portion, thereby forming the gutter shape. The convex portion is called a rib which serves a role of conducting electricity by contacting the membrane electrode assembly (MEA) via the gas diffusion layer. The concave portion is called channels which act as the passages for supplying fluids (the cooling medium, the fuel gas, the oxidizing gas) from the outside into the fuel cell and for discharging water etc.

The fluid guide path can form the fuel gas guide path at the main plane of one side of the anode side separator, at the same time, form the cooling medium path at the main plane of the other opposite side of the anode side separator. Alternatively, the fluid guide path can form the oxidizing gas guide path at the main plane of one side of the cathode side separator, at the same time, form the cooling medium path at the main plane of the other opposite side of the cathode side separator.

Accordingly, the structural components embodied and the related elements for the present invention are not limited to the above-described configuration, and they can be modified as appropriate.

Hereinafter, the embodiments for carrying out the present invention will be explained by referring to the attached drawings. In these drawings, the same reference sign is used for the same component throughout. The same reference signs are designated to the equivalent or corresponding portions, and their duplicated explanations are simplified or omitted. In these drawings, for the ease of viewing and to meet the convenience of explanation, the drawings are not drawn to a scale accurately, and some thin structural components are displayed as having a greater dimension than the actual dimension.

In the embodiments of the present invention, for the purpose of simplifying the explanation, the anode side fuel gas path where the hydrogen gas flows through and the cathode side oxidizing gas path where the oxygen gas flows through are explained without distinguishing them from one another. The fluid guide path of the present invention has two types, including: the gas guide path and the cooling medium path. Furthermore, the gas guide path includes 2 kinds, including: the fuel gas guide path (anode) and the oxidizing gas guide path (cathode). The gas guide path structure of the present invention can be applied both to the anode side path and the cathode side path. The "reaction gases" mentioned in the present patent specification includes the fuel gas, the oxidizing gas and the water vapor. The "gas guide path" includes both the anode side gas guide path and the cathode side das path. The "cooling medium path" is a path for flowing the cooling medium, for example, water, antifreezing water such as ethylene glycol, and air are used. The "base material" is a base plate where the rib 11 of the fluid guide path is going to be formed. The "first base material" indicates the gas diffusion layers 4, 5. The "second base material" indicates the separators 6, 7.

In the present invention, as the methods of adjoining the first base material and the second base material, there are 3 types; namely: "head-pushing method", "biting method" and "head-butting method". The details will be described later in this specification at the relevant embodiments, however, the "head-pushing method" is employed in the first and second embodiments, and the "biting method" and "head-butting method" are employed in the third embodiment. All 3 types are applied in the fourth and fifth embodiments and the other modification 1. These methods can be adopted to the formation of the gas guide path and the cooling medium path.

Among the drawings, the separators 6, 7 and/or the gas diffusion layers 4, 5 are regarded as the base materials, and an interface between the base material surface and the gas guide path rib 11 and the cooling medium path rib 11 adhered to the base material surface is expressed by a dotted line. The gas guide path rib 11 and the cooling medium path rib 11 is expressed by a slanted line shading. The sealing material 20 is expressed by the mono color grey.

### First Embodiment

Hereinbelow, the fuel cell having the fluid guide path for the first embodiment of the present invention will be described by using Figs. 2 through 5 (D), Figs. 10 (A), (B), (C), (D), Fig. 12, Figs. 13 (A), (B), (C), (D), (E), (F) and Figs. 16 (A), (B). Also, it should be noted that the present invention is not limited to the first embodiment.

As for the fuel cell provided with the fluid guide path mentioned in the first embodiment of the preset invention, as shown in Fig. 5, the gas guide path is not adhered to the surface of the gas diffusion layer 4, 5 but the gas guide path is adhered to the surface of the separator 6, 7. Furthermore, the cooling medium path is adhered to the separator 6, 7. Hereinbelow, the structure and mechanism of the fluid guide path according to the first embodiment will be explained.

The dimensional notation of the fluid guide path is expressed in Fig. 2. Following symbols are allotted. "h" denotes a rib height, "Rw1" denotes a rib width of the base material side. "Rw2" denotes a rib top width, "Cw" denotes a channel width, "a(alpha)", "β(beta)" denote inner angles formed by the rib interface (i.e. the boundary of the rib and the base material) and the rib side face, and "S" denotes a path pitch. As shown in Fig. 2, the main flow of the reaction gas passes through the channel extending along the center axis (expressed by a single dotted line in Fig. 2) of the concave portion. Additionally, there exists another flow of the reaction gas, that is, a "cross flow" which will be described later.

The manufacturing method of the fluid guide path according to the present invention is not particularly limited, however, to give an example, the base material having a pre-determined thickness (the separator and/or gas diffusion layer) is/are prepared. The surface of the base material is ideally smooth in shape, so that a flat thin metallic plate or any other conductive thin plate having less deformation is selected. As shown in Fig. 5 (D), an extremely thin carbon membrane is covered or deposited to such a thin plate.

Two-dimensional method of applying a pre-determined pressure to the gas guide path and the cooling medium path adhered to the base material surfaces using the dense and/or highly porous conductive carbon-based coating material, is preferred. This two-dimensional method includes a method of adhering the designed path wholly at once, such as printing method, injecting method, coating method, dispensing method, and transferring method. In this patent specification, the printing method is the screen printing. A process of implementing the hydrophilic process throughout the channel base and the rib side face of the fluid guide path is executed. A fluoride polymer material is preferably used as the hydrophilic agent applied to the fluid guide path, but not limiting, based on its excellence in the hydrophilic property and the anti-corrosion property during the electrode reaction. Also, in Fig. 5 (D), the gas guide path rib 11 is expressed by a trapezoid shape and the cooling medium path rib 11 is expressed by a rectangle shape, however, the rib shapes are not limited to them.

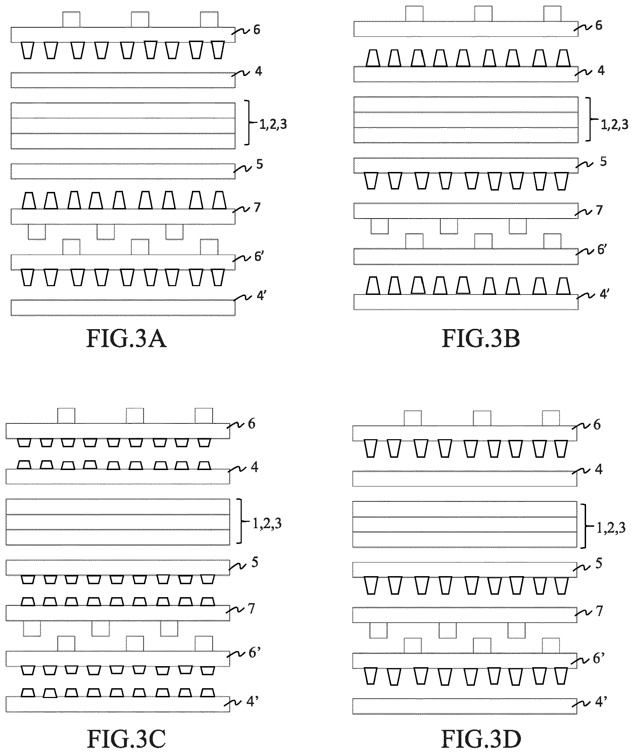

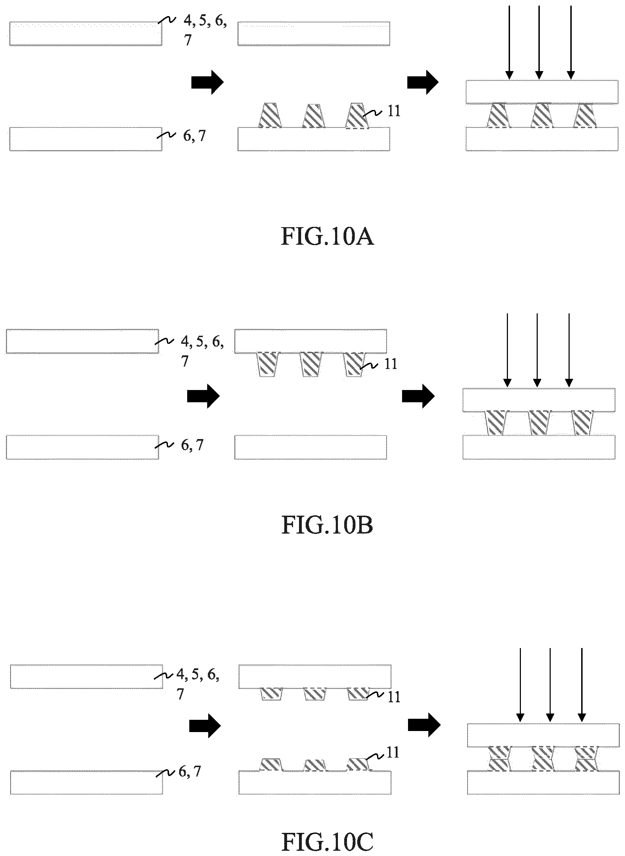

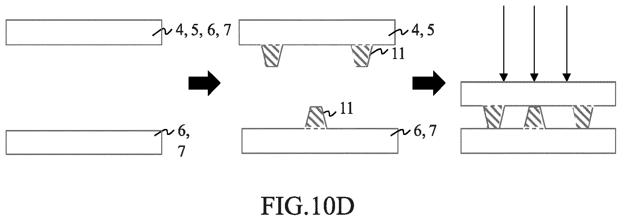

The sequence order of the fluid guide path formation mentioned in the first embodiment is depicted in Figs. 10 (A), (B), (C) and (D). Figs. 10 (A), (B), (C) and (D) show illustrations for schematically explaining the basic sequence order of the fluid guide path formation for the first embodiment. Fig. 3 (A) shows a systematic drawing of the fluid guide path of the first embodiment formed by adjoining and contacting (by sandwiching the rib) the top face of the gas guide path rib 11 adhered to the surface of the separator 6, 7 facing the gas diffusion layer 4, 5, with the surface of the gas diffusion layer 4, 5, in accordance to the explanation drawing of Fig. 10 (A). Also, Fig. 10 (D) is a schematic drawing of the cooling medium path formation of the third embodiment in which the cooling medium path is adhered to the respective surfaces of the opposing separators 6, 7, and the cooling medium path is formed by sandwiching the ribs so that the ribs are intersecting with one another.

Therefore, the gas guide path pertaining to the first embodiment is adhered to the surfaces of the separator 6, 7 and not adhered to the surface of the gas diffusion layer 4, 5. The cooling medium path is adhered to the surface of the separators 6, 7, and is formed by interchangeably contacting the adjacent separators 6, 7. The fluid guide path formation method of Fig. 10 (A) is called "head-pushing method" since the so-called "heads" of the ribs are being pushed against the facing base material (in this example, the gas diffusion layers 4, 5). The fluid guide path formation method of Fig. 10 (D) is called "biting method" since the rib heads are intersecting with one another.

In the first embodiment, the cooling medium path is formed by adhering the cooling medium path rib 11 to one face of the anode side separator 6 and/or the cathode side separator 7 and adjoining (by sandwiching the rib) the base materials closely. The cooling medium path shown in Fig. 3 (A) is employing the biting method, however, any one of the methods (the head-butting method, the head-pushing method, and the biting method) may be employed.

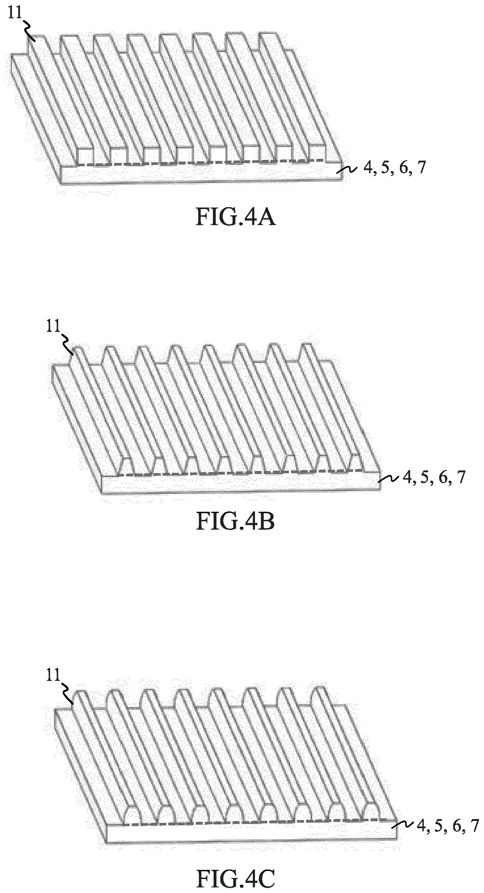

Referring to the fluid guide path mentioned in the first embodiment exemplified in Fig. 3 (A), for example, three variations of the fluid guide path shapes shown in Fig. 4 can be applied. Fig. 4 (A) is the fluid guide path structure having a rib's cross-sectional shape 11 of rectangle. Fig. 4 (B) is the fluid guide path structure having a rib's cross-sectional shape of trapezoid. Fig. 4 (C) is the fluid guide path structure having a rib's cross-sectional shape 11 of trapezoid with arc. Of course, the shape of the 3 kinds of fluid guide paths mentioned in the present patent specification is the typical example, and the present invention is not limited by the first embodiment. Various modification and application of the present invention are possible without deviating from its purport.

Figs. 5 (A), (B), (C) and (D) are the cross-sectional views of the fluid guide path structures related to the first embodiment that applied the typical example of the fluid guide path rib 11 for Figs. 4 (A), (B) and (C). The cross-sectional drawings of Figs. 5 (A), (B), (C) and (D) are the cross-sections that transact perpendicularly to the extended direction of the rib and the channel. The "rib's cross-sectional shape" or "rib shape" mentioned in the present patent specification is the shape of the rib seen in this cross section. Further, in the present patent specification, the rib's cross-sectional shape is orientated so that the rib's rim that contact the base material (expressed by a dotted line in the drawing) is the lower rim. In Fig. 5 (A), the rib's cross-sectional shape 11 is rectangle. In Fig. 5 (B), the rib's cross-sectional shapes 11 are rectangle and trapezoid. In Fig. 5 (C), the rib's cross-sectional shapes are rectangle and trapezoid with arc. Again, it goes without saying that the cross-sectional shapes of the fluid guide path rib 11 for the first embodiment are not limited to the shapes of Figs. 5 (A), (B) and (C).

Further, conventionally, since the fluid guide path has been formed by graving the base material as a master material to form the channels with the same base material, therefore, the path has to be designed by keeping in one's mind the channel shape. However, in the present invention, the fluid guide path is formed on top of the surface of the base material (the separator, the gas diffusion layer), so that the fluid guide path design is examined based on the rib's cross-sectional shape. Therefore, the present patent specification goes ahead with explaining the fluid guide path structure pursuing the rib's cross-sectional shape while checking the channel shape.

The example of Fig. 5 (A) is the fluid guide path structure with a rectangular shaped cross-sectional rib 11 formed by making the rib width Rw1 of the base material side (the separator in this example) equal to the rib top width Rw2 (Rw1=Rw2). According to this example, since the inner angles a(alpha) and β(beta) formed by the rib interface and the rib side face are both 90 degrees, therefore, the rib's cross-sectional shape becomes left-right symmetric. However, as can be understood by paying attention to the upper left drawing of Fig. 5 (A), if the dimensional values of rib widths Rw1 and Rw2 are set too large, the cross flow (that is, the flow from the channel permeating through the gas diffusion layer, the gas flow from the gas diffusion layer entering the channel) of the reaction gas becomes difficult. The flow lines of the cross flows at the gas diffusion layer 4, 5 and the channels are expressed by arrows in Fig. 5 (A).

The example of Fig. 5 (B) is the gas guide path structure with a trapezoid shaped cross-sectional rib 11 formed by increasing the rib width Rw1 of the base material side (the separator in this example) and by decreasing the rib top width Rw2 (Rw1>Rw2). Fig. 5 (C) is the gas guide path structure with a trapezoid shaped cross-sectional rib 11 formed by increasing the rib width Rw1 of the base material side (the separator in this example) and by decreasing the rib top width Rw2 (Rw1>Rw2). According to the examples of Figs. 5 (B) and (C), the inner angles α(alpha) and β(beta) formed by the rib interface of the gas guide path and the rib side face are both less than 90 degrees, so that the rib's cross-sectional shapes become left-right symmetric. As for the example of Figs. 5 (B), (C), since the dimensional value of the rib top width (Rw2) touching the gas diffusion layer 4, 5 is small, therefore, this shape can facilitate the cross flow of the reaction gas diffusing through the gas diffusion layer 4, 5. That is, this being the rib's cross-sectional shape where the reaction gas diffuses easily, the gas guide path structure having a favorable gas diffusing ability can be realized. Further, in Figs. 5 (A), (B), (C), the cooling medium path rib 11 having a rectangular shape in cross section is employed.

As the main characteristic of the embodiments of the present invention, the fluid guide path rib 11 can arbitrarily be formed by appropriately combining the dimensional values of the rib width Rw1, the rib top width Rw2, the channel width Cw, the rib height h, the inner angles α(alpha), β(beta), the path pitch S, and so forth on. That is, the shape of the fluid guide path rib 11 of the present invention is not specified just to the structure mentioned in the present patent specification, and various combinations of the cross-sectional shapes of the fluid guide path rib 11 that take into consideration the characteristics peculiar to the rib material and the structure most suitable for the purpose of the present invention can be applied.

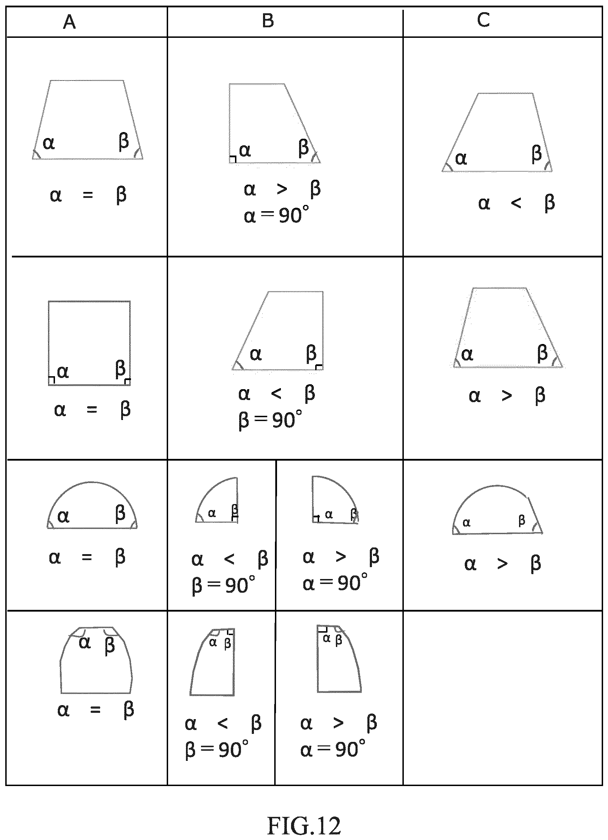

Herein, the rib's cross-sectional shapes of the present invention have inverted rib shapes, respectively, as shown in the columns A, B, C of Fig. 12. In specific terms, there are: left-right symmetric rectangle, left-right asymmetric rectangle and its inverted type, left-right symmetric trapezoid and its inverted type, left-right asymmetric trapezoid and its inverted type, left-right symmetric circular shape and its inverted type, left-right asymmetric non-circular shape (elongated circle) and its inverted type, left-right symmetric rectangle with arc and its inverted type, left-right asymmetric rectangle with arc and its inverted type, left-right symmetric trapezoid with arc and its inverted type, and left-right asymmetric trapezoid with arc and its inverted type.

What this is suggesting will be described in detail by using Fig. 12. Referring to the rib width Rw1 and the rib top width Rw2 of the base material side, their relative dimensions (large and small relationship) affect the individual rib's cross-sectional shape. That is, the rib's cross-sectional shape can be changed by arbitrarily changing the rib widths (Rw1, Rw2). Similarly, as for the inner angles α(alpha), β(beta), their relative dimensions (large and small relationship) affect the individual cross-sectional rib shape. This means that the rib's cross-sectional shape becomes left-right symmetric by setting the inner angles as α(alpha) = β(beta) (see the column A of Fig. 12). The rib's cross-sectional shape becomes left-right asymmetric by setting the inner angles as α(alpha)>β(beta), α(alpha)<β(beta) (see the columns B and C of Fig. 12).

On the other hand, in regard to the dimensional values of the channel width Cw, the rib height h, and the path pitch S, since these elements do not affect the symmetry of the rib's cross-sectional shape, such that they can be set independently. Henceforth, these values do not need to be constant value having consistency, and irregular values can be set to them. For example, by setting the values for channel width Cw and the path pitch S with variance, the channel formation with irregular interval is possible (such as preparing 2 channel widths Cw to be set alternately). In addition to the rib's cross-sectional shape described above, various types of fluid guide path structure can be found by attempting to combine various rib's cross-sectional shapes within the conceivable range, for the fluid guide path pertaining to the first embodiment.

According to the fluid guide channel rib 11 mentioned in the first embodiment, the left-right symmetric ribs in cross-sectional shape shown in the column A of Fig. 12 are explained by using Figs. 5 (A), (B), (C) and (D), however, the shapes need not be limited to this example, and the left-right asymmetric ribs in cross-sectional shape shown in the columns B and C of Figs. 12 can also be applied. Further, as shown in Fig. 12, the inverted type of the left-right symmetric and left-right asymmetric ribs in cross-sectional shape can also be applied. Furthermore, corners of these ribs can be arched so that the rounded-corner rib shape can be applied, or their combinations.

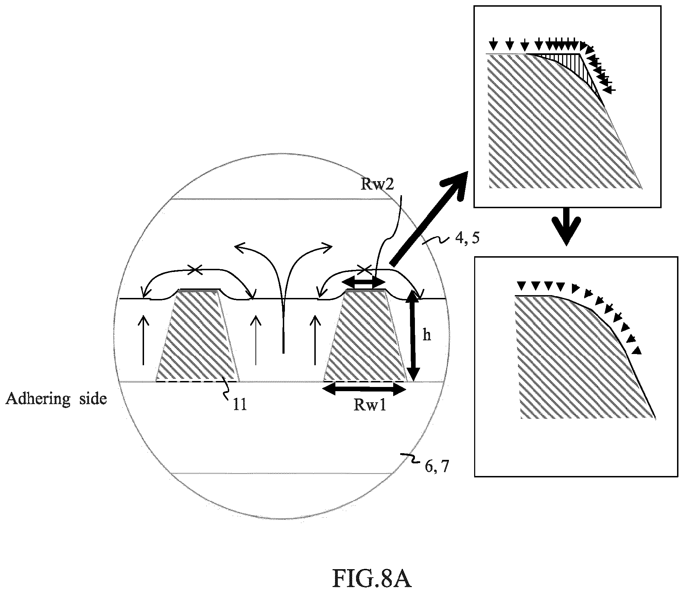

Fig. 8 (A) shows a partially enlarged view of Fig. 5 (B). When the fluid guide path rib 11 adhered to the separator 6, 7 adjoins with the gas diffusion layer 4, 5 (the head-pushing method), as shown in the upper right drawing which further enlarged Fig. 8 (A) showing the corner portion of the rib, the stress is concentrated at the corner of the rib's upper face. In order to ease such stress concentration, as shown in the lower right drawing of Fig. 8 (A), the stress is dispersed by increasing the radius of curvature for the angle formed by the rib corner and the gas diffusion layer 4, 5. Therefore, the stress is dispersed by adhering the rib to have the arch shape, during the path formation. Further, the arrows drawn in the enlarged cross section drawing of Fig. 8 (A) indicate the cross flow direction of the reaction gases.

As shown in the enlarged drawing of Fig. 8 (A), since the rib top width Rw2 contacting the gas diffusion layer 4, 5 is less than the rib width Rw1 of the separator side, therefore, the cross flow of the reaction gas diffusing through the gas diffusion layer 4, 5 is facilitated, therefore, the reaction gas flow is in good condition.

As far as the gas diffusion ability is concerned, especially with the example of Fig. 5 (B), by applying the gas guide path structure mentioned in the first embodiment, one can say that this is the structure for facilitating the cross flow of the reaction gas diffusing in the gas diffusion layer 4, 5, since the gas guide path is adhered to the separator 6, 7 at Rw1>Rw2 relationship. That is, this rib's cross-sectional shape can facilitate the diffusion of the reaction gas, such that the fluid guide path structure having the excellent gas diffusion ability is realized. In the example of Fig. 5 (C), since the gas guide path is adhered to the separator 6, 7 at Rw1>Rw2 relationship, the excellent gas permeability is exhibited to the gas diffusion layers 4, 5. Also, the two sides of the rib are arced in shape so that the reaction gas pressure and the flow amount can be adjusted by changing the rib width. Not only the adjustment of Rw1, Rw2 and the inner angles α(alpha) and β(beta) of the rib but also the two sides of the arc-shaped rib is added, thereby improving the gas permeability, and the reaction gas pressure and the flow amount can be adjusted by changing the middle part of the rib width.

In the first embodiment, the dense and highly conductive carbon-based coating material of the same kind can be used for adherence as the rib 11 configuring the fluid guide path adhered to the separator 6, 7, or a different material can be used.

In the first embodiment, the separator 6, 7 adhering the fluid guide path, and the gas diffusion layer 4, 5 without the fluid guide path are independent, and these components are not integrated.

Referring to the first embodiment, the pattern of the fluid guide path is not particularly limited, and it can be designed in the similar manner as the design the fluid guide path patterns used in the conventional separators. Examples includes a straight type, a serpentine type, a comb type and so forth on.

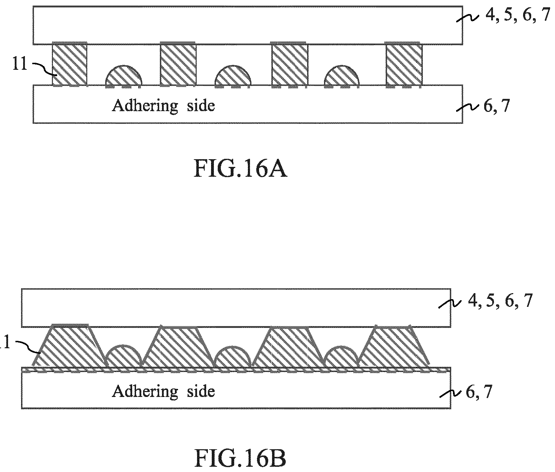

Figs. 16 (A), (B) show some examples of variations of the fluid guide path formed based on the first embodiment. The example shown in Fig. 16 (A) is a cross-sectional view of the two rib shapes adhered to the separator (the second base material) including a left-right symmetric rectangular rib in cross-sectional shape and a left-right symmetric half circle rib in cross-sectional shape, that are alternately formed thereon. The example shown in Fig. 16 (B) is a cross-sectional view of the two rib shapes adhered to the separator (the second base material) including a left-right symmetric trapezoid rib in cross-sectional shape and a left-right symmetric half circle rib in cross-sectional shape, that are alternately formed thereon. In this example, the base coating layer is applied by adhering without any space throughout to the whole surface of the separator 6, 7 where the path is going to be formed. The adhering material to be used for overall complete coating is not limited to one kind, and it can depend on the demands of the rib characteristics.

In the examples of Figs. 16 (A), (B), some of the upper part of the ribs 11 (rectangular and trapezoid ribs) of the separator 6, 7 contact the gas diffusion layer 4, 5, and there is a gap between some of the other upper part of the ribs 11 (half circle ribs) and the gas diffusion layer 4, 5. One can understand that the structure of setting the ribs 11 to the gas diffusion layer 4, 5, will be similar.

As described above, the fluid guide path structure pertaining to the first embodiment of the present invention is just an example, and needless to say that it should not be limited to the contents mentioned in the present patent specification.

### Second Embodiment

Hereinbelow, the fuel cell having the fluid guide path for the second embodiment of the present invention will be described by using Figs. 2 through Figs. 4 (C), Figs. 6 (A), (B), (C), (D) and Figs. 10 (A), (B), (C), (D). It should be noted that the present invention is not limited to the second embodiment.

The above-mentioned first embodiment has described the example of forming the fluid guide path only on the surface of the separator 6, 7 (the second base material). Regarding the fuel cell provided with the gas guide path which will be described in the second embodiment of the present invention, as shown in Figs. 6 (A), (B), (C) and (D), the main point of difference is that the fluid guide path is not adhered to the surface of the separator 6, 7 but adhered to the surface of the gas diffusion layer 4, 5 for implementation. Other structures and mechanisms are mostly the same as the first embodiment of Fig. 5. Note that the portions identical to the contents of the first embodiment shown in Fig. 5 are annotated with the same reference signs, and their explanations are partially omitted.

The dimensional notation of the fluid guide path and the manufacturing method of the fluid guide path of the present invention are as already explained in the first embodiment, and the explanations are omitted herewith.

The sequence order of the fluid guide path formation mentioned in the second embodiment is depicted in Figs. 10 (A), (B), (C) and (D). The example of the gas guide path is explained first. Figs. 10 (B) and (C) show illustrations for schematically explaining the basic sequence order of the fluid guide path formation for the second embodiment. Fig. 3 (B) shows a systematic drawing of the gas guide path of the second embodiment formed by adjoining (sandwiching the ribs) and contacting the upper face of the gas guide path rib 11 adhered to the surface of the gas diffusion layer 4,5 facing the separator 6,7, with the surface of the separator 6, 7, in accordance to the explanation drawing of Fig. 10 (B). Fig. 10 (D) is a schematic drawing of the cooling medium path formation of the third embodiment in which the cooling medium path is adhered to the respective surfaces of the opposing separators 6, 7, and the cooling medium path is formed by sandwiching the ribs so that the ribs are intersecting with one another.

Therefore, the gas guide path pertaining to the second embodiment is not adhered to the surfaces of the separator 6, 7 but adhered to the surface of the gas diffusion layer 4, 5. The cooling medium path is adhered to the surface of the separator 6, 7, and the cooing medium path is formed by pushing (by sandwiching the rib) to the adjacent separator 6, 7. The fluid guide path formation method of Fig. 10 (B) is called "head-pushing method" since the ribs are being pushed against the base material (in this example, the separator 6, 7) facing the so-called "heads" of the ribs. The fluid guide path formation method of Fig. 10 (D) is also called "biting method" since the rib heads are intersecting with one another.

In the second embodiment, the cooling medium path is formed by adhering the cooling medium path rib 11 to one face of the anode side separator 6 and/or the cathode side separator 7 and adjoining (by sandwiching the rib) the base materials closely. The cooling medium path shown in Fig. 3 (A) is employing the biting method, however, any one of the methods (the head-butting method, the head-pushing method, the biting method) may be employed.

Referring to the fluid guide path mentioned in the second embodiment depicted in Fig. 3 (B), for example, three variations of the fluid guide path shapes shown in Fig. 4 can be applied. Of course, the shape of the 3 fluid guide paths mentioned in the present patent specification is the typical example, and the present invention is not restricted by the second embodiment. Various modification and application of the present invention are possible without deviating from its purport.

Figs. 6 (A), (B), (C) and (D) are the cross-sectional views of the fluid guide path structures related to the second embodiment that applied the typical example of the fluid guide path ribs 11 of Figs. 4 (A), (B) and (C). The cross-sectional drawings of Figs. 6 (A), (B), (C) and (D) are the cross-sections that transact perpendicularly to the extended direction of the rib and the channel. The "rib's cross-sectional shape" or "rib shape" mentioned in the present patent specification is the shape of the rib seen in this cross section. Further, in the present patent specification, the rib's cross-sectional shape is orientated so that the rib's rim that contact the base material (expressed by a dotted line in the drawing) is the lower rim. In Fig. 6 (A), the rib's cross-sectional shape 11 is rectangle. In Fig. 6 (B), the rib's cross-sectional shapes 11 are rectangle and trapezoid. In Fig. 6 (C), the rib's cross-sectional shapes 11 are rectangle and trapezoid with arc. Again, it goes without saying that the cross-sectional shapes of the fluid guide path ribs for the second embodiment are not limited to the rib shapes of Figs. 6 (A), (B) and (C).

The example of Fig. 6 (A) is the fluid guide path structure having a rectangular shaped cross-sectional rib 11 is formed by making the rib width Rw1 of the base material side (the gas diffusion layer in this example) equal to the rib top width Rw2 (Rw1=Rw2). According to this example, since the inner angles α(alpha) and β(beta) formed by the rib interface and the rib side face are both 90 degrees, therefore, the rib's cross-sectional shape becomes left-right symmetric. However, as can be understood by paying attention to the left upper drawing of Fig. 6 (A), if the dimensional values of rib widths Rw1 and Rw2 are set too large, then the cross flow of the reaction gas that nfluences the gas permeability, becomes difficult. That is, the flow speed and the flow amount of the reaction gas are liable to become insufficient. The flow lines of the cross flows at the gas diffusion layer 4, 5 and the channels are expressed by arrows in Fig. 6 (A).

The rib 11 of the cooling medium path shown in the example of Fig. 6 (B) is rectangle, and the rib 11 of the gas guide path is trapezoid. The gas guide path structure having a trapezoid shaped cross-sectional rib 11 is formed by increasing the rib width Rw1 of the base material side (the gas diffusion layer in this example) and by decreasing the rib top width Rw2 (Rw1>Rw2).

The rib 11 of the cooling medium path shown in the example of Fig. 6 (C) is rectangle, and the rib 11 of the gas guide path is arc-shaped trapezoid. The gas guide path structure having the arc-shaped trapezoid shaped cross-sectional rib 11 is formed by increasing the rib width Rw1 of the base material side (the gas diffusion layer in this example), by decreasing the rib top width Rw2 (Rw1>Rw2), and by making the arch shape to the two sides of the rib.

The rib 11 of the cooling medium path shown in the example of Fig. 6 (D) is rectangle, and the rib 11 of the gas guide path is inverted trapezoid. The gas guide path structure having the inverted trapezoid shaped cross-sectional rib 11 is formed by decreasing the rib width Rw1 of the base material side (the gas diffusion layer in this example) and by increasing the rib top width Rw2 (Rw1<Rw2).

According to the examples of Figs. 6 (B), (C) and (D), the gas guide path rib's cross-sectional shapes become left-right symmetric. Figs. 6 (B), (C) show the inner angles α(alpha) and β(beta) formed by the rib interface of the gas guide path and the rib side face are both less than 90 degrees. Fig. 6 (D) shows the inner angles α(alpha) and β(beta) formed by the rib interface of the gas guide path and the rib side face are both greater than 90 degrees. As for the gas guide path structure of Figs. 6 (B) and (C), if the rib widths Rw1 is set too large, then the contacting face of the gas diffusion layer 4, 5 and the fluid guide path decreases, and this causes hinderance of the promotion of the reaction gas cross flow. This is inappropriate in terms of the gas permeability. Henceforth, under the gas guide path structure of Figs. 6 (B) and (C), the inner angles α(alpha) and β(beta) are approached close to the right angle (the inner angles α(alpha) and β(beta) are set greater), the contacting area of the gas diffusion layer 4, 5 and the fluid guide path is expanded by attempting to narrow the rib width Rw1 of the base material side, thereby increasing the gas permeability. As shown in Fig. 6 (D), the inner angles α(alpha) and β(beta) formed by the rib interface of the gas guide path and the rib side face can both be set greater than 90 degrees, the rib's cross-sectional shape of the gas guide path is inverted trapezoid, and the gas permeability is improved by decreasing the rib width Rw1. Also, the two sides of the rib of Fig. 6 (C) have arch shape that can adjust the reaction gas pressure and the flow amount by changing the rib width. Not only the adjustment of Rw1 and Rw2 and the inner angles α(alpha) and β(beta) of the rib but also the arch shape can be added to the two sides of the rib, thereby improving the gas permeability, and the reaction gas pressure and flow amount can be adjusted, by changing the rib width.

Being the main characteristic of the embodiments of the present invention, the rib shape of the fluid guide path of the present invention is not specified just to the structure mentioned in the present patent specification, and various combinations of the rib's cross-sectional shapes of the fluid guide path that takes into consideration the characteristics peculiar to the rib materials and the structures most suitable to the purpose of the present invention can be applied. Refer to the first embodiment for the detailed explanation concerning this. In addition to the rib's cross-sectional shapes described above, by combining various rib's cross-sectional shapes conceivable within the possible scope, a diversity of the fluid guide path structures can be manufactured for the fluid guide path related to the second embodiment.

According to the fluid guide path rib 11 mentioned in the second embodiment, the left-right symmetric rib in cross-sectional shapes shown in the column A of Fig. 12 is explained by using Figs. 6 (A), (B), (C) and (D), however, the shapes need not be limited to this example, and the left-right asymmetric rib in cross-sectional shapes shown in the columns B and C of Fig. 12 can be applied. Further, as shown in Fig. 12, the inverted type of the left-right symmetrical and the left-right asymmetric ribs in cross-sectional shapes can be applied. Furthermore, corners of these rib's cross-sectional shapes can be arched to apply the rounded-corner shapes, or their combinations can be applied.

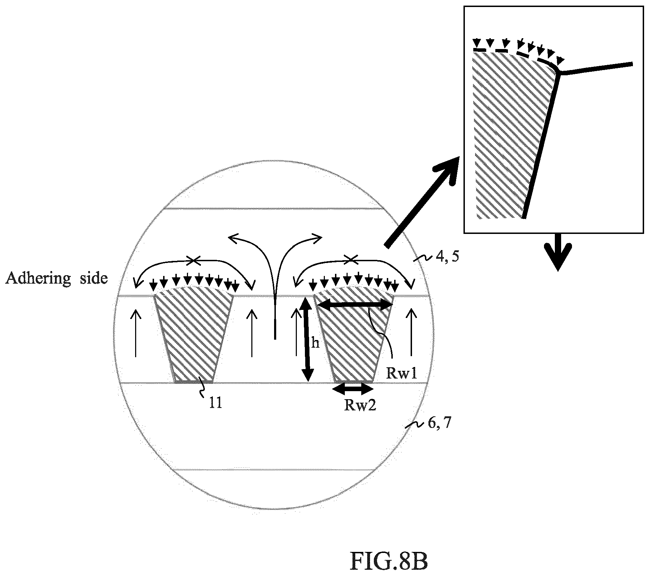

Fig. 8 (B) shows a partially enlarged view of Fig. 6 (B). When the top face of the gas guide path rib 11 adhered to the gas diffusion layer 4, 5 adjoins the separator 6, 7 (the head-pushing method), as shown in the upper right drawing which further enlarged Fig. 8 (B), the rib material tucks to the gas diffusion layer 4,5 so that arc-shaped interface is formed. In this way, the stress put on the interface is dispersed, which effectively anchors the components. The adhering property of the gas guide path rib 11 and the gas diffusion layer 4, 5 at the interface is improved.

As far as the gas permeability is concerned, especially with the example of Fig. 6 (D), by applying the fluid guide path structure mentioned in the second embodiment, one can say that this is the structure for facilitating the cross flow of the reaction gas diffusing to the gas diffusion layer 4, 5 since the gas guide path is adhered to the gas diffusion layer 4, 5 at Rw1<Rw2 relationship. That is, the rib's cross-sectional shape can facilitate the diffusion of reaction gas, so that the fluid guide path structure having the excellent gas permeability is realized.

In the example of Figs. 6 (B) and (C), since the fluid guide path is adhered and printed to the gas diffusion layer 4, 5 at Rw1<Rw2 relationship, the contact area of the gas flowing through the channel and the gas diffusion layer is small compared to the fluid guide path structure (shape and size) of Fig. 6 (D), however, the gas permeability is improved by adjusting appropriately the dimensional values of the rib widths Rw1 and Rw2 and the inner angles α(alpha) and β(beta).

In the second embodiment, the dense and highly conductive carbon-based coating material of the same kind can be used for adherence as the rib 11 configuring the cooling medium path adhered to the separator and the rib 11 configuring the gas guide path adhered to the gas diffusion layer 4, 5, or a different material can be used.

In the second embodiment, the fluid guide path, the gas diffusion layer 4, 5 adhering the gas guide path, and the separator 6, 7 adhering the cooling medium path, are all independent, and these 3 components are not integrated.

Referring to the second embodiment, the pattern of the fluid guide path is not particularly limited, and it can be designed in the similar manner as the design the fluid guide path patterns used in the conventional separators. Examples includes a straight type, a serpentine type, a comb type and so forth on.

As described above, the fluid guide path structure pertaining to the second embodiment of the present invention is just an example, and needless to say that it should not be limited to the contents mentioned in the present patent specification.

### Third Embodiment

Hereinbelow, the fuel cell having the fluid guide path for the third embodiment of the present invention will be described by using Figs. 3 (A) through (F), Figs. 4 (A) through (C), Figs. 7 (A) through (C) and Fig. 10 through Fig. 15 (B). It should be noted that the present invention is not limited to the third embodiment.

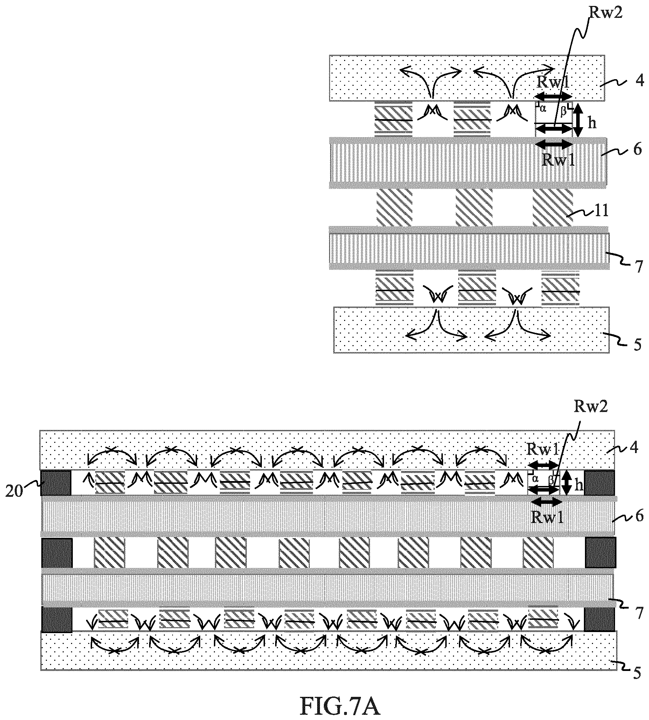

The above-mentioned first and second embodiments have described the examples of forming the fluid guide path on either one of the surface of the first base material (the gas diffusion layer 4, 5) or the surface of the second base material (the separator 6, 7), and the fluid guide path is not formed on the other one. In the third embodiment of the present invention, as shown in Figs. 7 (A) through (C), the main point of difference is that the gas guide path is adhered to the surface of the separator 6, 7 facing the gas diffusion layer 4, 5, and separately, the gas guide path is adhered to the surface of the gas diffusion layer 4, 5 facing the separator 6, 7, and after the respective adherence, both the base materials having formed the ribs thereon are adjoined to one another for implementation. Other structures and mechanisms are mostly the same as the first and second embodiments shown in Figs. 5 (A) through (D), Figs. 6 (A) through (D). Note that the portions identical to the contents of the first and second embodiments shown in Figs. 5 (A) through (D) and Figs. 6 (A) through (D) are annotated with the same reference signs, and their explanations are partially omitted.

The dimensional notation of the fluid guide path and the manufacturing method of the fluid guide path of the present invention are as already explained in the first and second embodiments, and the explanations are omitted herewith.

The sequence order of the fluid guide path formation mentioned in the third embodiment is depicted in Figs. 10 (A), (B), (C) and (D). Figs. 10 (C), (D) show illustrations for schematically explaining the basic sequence order of the fluid guide path formation for the third embodiment. Fig. 3 (C) shows a systematic drawing of the gas guide path of the third embodiment formed by adhering the gas guide path rib 11 to the surface of the separator 6, 7 facing the gas diffusion layer 4, 5, and by separately adhering the gas guide path rib 11 to the surface of the gas diffusion layer 4, 5 facing the separator 6, 7, and after that the two surfaces are adjoined (by sandwiching the rib) in accordance to the explanation drawing of Fig. 10 (C). Fig. 10 (D) is a schematic drawing of the cooling medium path formation of the third embodiment in which the cooling medium path is adhered to the respective surfaces of the opposing separators 6, 7, and the cooling medium path is formed by sandwiching the ribs so that the ribs are intersecting with one another.

Therefore, the gas guide path pertaining to the third embodiment is adhered to the surfaces of the separator 6, 7 and the surface of the gas diffusion layer 4, 5, and the cooing medium path is adhered to the surfaces of the separators 6, 7 so that the rib contacts the adjacent separators 6, 7 interchangeably. The fluid guide path formation method of Fig. 10 (C) is called "head-butting method" since the ribs heads are being butted to one another. The fluid guide path formation method of Fig. 10 (D) is also called "biting method" since the rib heads are intersecting with one another.

In the third embodiment, the cooling medium path is formed by adhering the cooling medium path rib 11 to the opposite side(s) of the anode side separator 6 and/or the cathode side separator 7, holding the edges of the adjacent separator, and contacting the surface of the adjacent cathode side separator 7 or the anode side separator 6 with the cooling medium path rib 11. The cooling medium path shown in Fig. 3 (A) is employing the biting method, however, any one of the methods (the head-butting method, the head-pushing method, the biting method, and) may be employed.

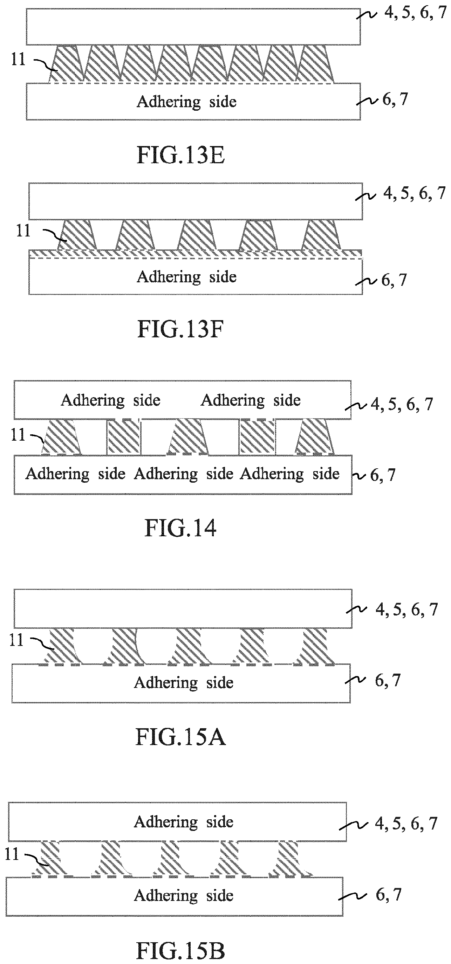

In the third embodiment, the gas guide path is formed by the head-butting method based on the fact that the rib of the fluid guide path adhered to the surfaces of the separator 6, 7 and the rib of the fluid guide path adhered to the gas diffusion layer 4, 5 are butted, however, the biting method shown in Fig. 14 may be employed.

Fig. 14 shows, according to the explanation drawing of Fig. 10 (D), a schematic drawing of the fluid guide path for the third embodiment, which is formed by adhering the gas guide path to the surface of the separator 6, 7 facing the gas diffusion layer 4, 5, and adhering the gas guide path also to the surface of the separator 6, 7, and the ribs are bitten. This method is called "biting method" since the rib heads are biting with one another. That is, in the third embodiment, the gas guide path is attached both to the surfaces of the separator 6, 7 and the surfaces of the gas diffusion layer 4, 5. In the third embodiment, any one of the methods (the head-butting method, the head-pushing method, the biting method) may be employed.

Referring to the gas guide path mentioned in the third embodiment of Fig. 3 (C), for example, three variations of the fluid guide path shapes shown in Figs. 4 (A), (B), (C) can be applied. Of course, the shape of the 3 fluid guide paths mentioned in the present patent specification is the typical example, and the present invention is not restricted by the third embodiment. Various modification and application of the present invention are possible without deviating from its purport.

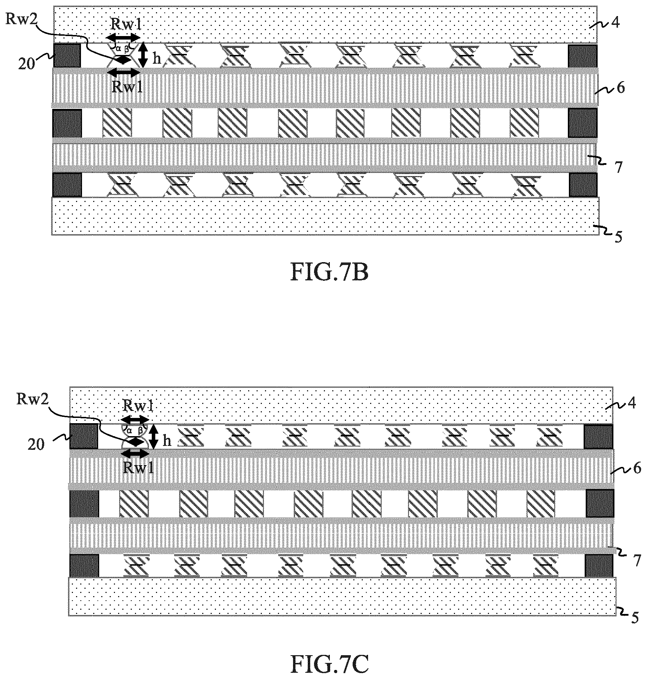

Figs. 7 (A), (B), (C) are the cross-sectional views of the fluid guide path structures related to the third embodiment that applied the typical examples of the fluid guide path ribs 11 of Figs. 4 (A), (B) and (C). The cross-sectional drawings of Figs. 7 (A), (B), (C) are the cross-sections that transact perpendicularly to the extended direction of the rib and the channel. The "rib's cross-sectional shape" or "rib shape" mentioned in the present patent specification is the shape of the rib seen in this cross section. Further, in the present patent specification, the rib's cross-sectional shape is orientated so that the rib's rim that contact the base material (adhering side) is the lower rim. In Fig. 7 (A), the rib's cross-sectional shape 11 is rectangle. In Fig. 7 (B), the rib's cross-sectional shapes 11 are rectangle and trapezoid. In Fig. 7 (C), the rib's cross-sectional shapes 11 are rectangle and trapezoid with arc. Again, it goes without saying that the cross-sectional shapes of the gas guide path ribs 11 of the third embodiment are not limited to the shapes of Figs. 7 (A), (B) and (C).

According to the fluid guide path rib 11 mentioned in the third embodiment, the left-right symmetric rib in cross-sectional shape shown in the column A of Fig. 12 is explained by using Figs. 7 (A), (B), (C), however, the shape is not limited to this type, and the left-right asymmetric rib in cross-sectional shape shown in the columns B, C of Figs. 12 can also be applied. Also, as shown in Fig. 12, the inverted type of the left-right symmetric rib and the left-right asymmetric rib in cross-sectional shape can be applied. Further, the rib's cross-sectional shapes can be made to have an arch at corners to make a corner-rounded shape, or their combinations can be applied.

The example of Fig. 7 (A) is the fluid guide path structure with the rectangular shaped cross-sectional rib 11 formed by making the rib width Rw1 of the base material side (the separator and the gas diffusion layer in this example) equal to the rib top width Rw2 (Rw1=Rw2). According to this example, since the inner angles α(alpha) and β(beta) formed by the rib interface and the rib side face are both 90 degrees, therefore, the rib's cross-sectional shape becomes left-right symmetric. However, as can be understood by paying attention to the left upper drawing of Fig. 7 (A), if the dimensional values of rib widths Rw1 and Rw2 are set too large, this will affect the flow amount of the reaction gas, and the cross flow of the reaction gas becomes difficult. The flow lines of the cross flows at the gas diffusion layer 4, 5 and the channels are expressed by arrows in Fig. 7 (A).

The examples of Figs. 7 (B), (C) are the gas guide path structure with a trapezoid shaped cross-sectional rib 11 formed by increasing the rib width Rw1 of the base material side (the separator and the gas diffusion layer in this example) and by decreasing the rib top width Rw2 (Rw1>Rw2). According to the examples of Figs. 7 (B) and (C), the rib's cross-sectional shapes are left-right symmetric, and the inner angles α(alpha) and β(beta) formed by the rib interface and the rib side face are both less than 90 degrees. In Figs. 7 (A), (B), (C), the cooling medium path rib 11 employs the rib 11 having a rectangular cross section.

The gas guide path shown in the examples of Figs. 7 (B) and (C) is formed by adjoining the gas guide path rib 11 adhered to the separator 6, 7 and the fluid guide path rib 11 adhered to the gas diffusion layer 4, 5 (so that the rib heads are in contact with one another). The upper faces of the respective ribs 11 are made flat so that they are easily adjoined. As shown in Figs. 7 (B) and (C), the adjoined rib portion (the intermediate portion) has a small upper width Rw2 of the trapezoid rib, therefore, the rib 11 is narrowed, but the channel portion is expanded. Thus, the gas flow at the channel portion is effectively improved. As shown in Fig. 7 (C), the adjoined rib portion (the intermediate portion) has a larger upper width Rw2 of the trapezoid rib, and since the rib's cross-sectional shape has a slight inclination to the rib surface, when this gas guide path structure is adopted to the cathode side, the water droplets will drip over the surface of the rib at low temperature and are accumulated to the base plane of the channel of the separator 7 side, so that this is effective structure in preventing the generated water from accumulating within the gas diffusion layer 5.

Being the main characteristics of the embodiments of the present invention, the shape of the fluid guide path rib that can be flexibly adhered is not specified just to the structure mentioned in the present patent specification, but various combinations of the cross-sectional shapes of the fluid guide path ribs that take into consideration the characteristics peculiar to the rib materials and the structures most suitable for the purpose of the present invention can be applied. Details are omitted herewith being the same as that of the first and second embodiments. In addition to the rib's cross-sectional shapes described above, by combining various rib's cross-sectional shapes conceivable within the possible scope, a diversity of the fluid guide path structures can be manufactured for the fluid guide path related to the third embodiment.

As per above, the case of all the rib's cross-sectional shapes of the fluid guide paths adhered to the first and the second base materials for completely left-right symmetric shape is described. The present invention is still applicable even if the rib's cross-sectional shape of the fluid guide path adhered to the first and second base materials are asymmetric or inverted type, or their combinations.

As already described, in the third embodiment, the fluid guide paths are formed both on the first base material and the second base material, therefore, 2 types of the rib shape arrangement exist. These are the gas guide path structure formed by the head-butting method and the fluid guide path structure formed by the biting method.

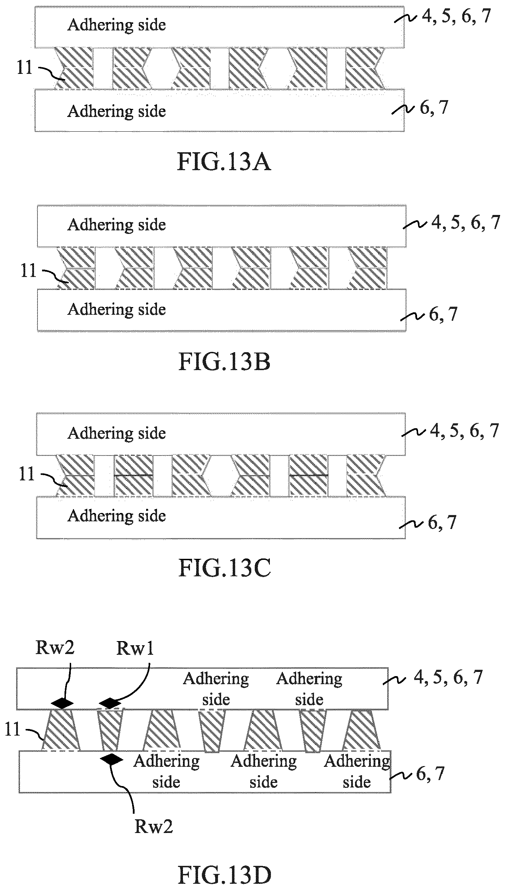

Several representative examples are shown in Figs. 13 (A) through (F). Figs. 13 (A), (B) and (C) are the cross-sectional drawings of the fluid guide path structure that appropriately combined the left-right symmetric fluid guide path rib's cross-sectional shapes (and their inverted type shapes) of the column A of Fig. 12, and the fluid guide path structure that combined the left-right asymmetric fluid guide path rib's cross-sectional shapes (and their inverted type shapes) of the columns B, C of Figs. 12, based on the fluid guide path structure formed by using the head-butting method of the third embodiment. Fig. 13 (D) illustrates one example of the cross-sectional drawing of the fluid guide path structure that appropriately combined the trapezoid rib and the inverted trapezoid rib having different sizes and shapes, based on the fluid guide path structure formed by using the biting method of the third embodiment. Similarly, by using this biting method, the fluid guide path structure that appropriately combined the left-right symmetric fluid guide path rib's cross-sectional shapes (and their inverted type shapes) of the column A of Fig. 12 and the left-right asymmetric fluid guide path rib's cross-sectional shapes (and their inverted type shapes) of the columns B, C of Figs. 12 is formed. Figs. 13 (E) and (F) illustrate the case of modifying the fluid guide path rib 11, based on the fluid guide path structures of the first embodiment and the second embodiment.

Fig. 13 (D) illustrates the case of adhering the left-right symmetric trapezoid rib in cross-sectional shape to the gas diffusion layer 4, 5, and adhering the left-right symmetric trapezoid rib in cross-sectional shape to the separator 6, 7 also, and the upper faces of the respective rib's cross-sectional shapes are held together so that the rib heads do not touch with one another (that is, biting). In the example that applied this biting method, a size of the rib's cross-sectional shape 11 of the gas diffusion layer 4, 5 is made smaller than a size of the rib cross-sectional shape 11 of the separator 6, 7. The reason for this is, as is apparent from Fig. 13 (D), since the upper face width Rw2 of the rib adhered to the separator 6, 7 and the rib interface width Rw1 of the rib adhered to the gas diffusion layer 4, 5 are made equal in size, therefore, the contact face between the reaction gas flowing through the channel and the gas diffusion layer 4, 5 are distributed equally, and the contact area is secured to a large extent. This not only makes the reaction gas flow easy but also the reaction gas permeability within the gas diffusion layer 4, 5 is improved.

Also, basically, in order to allow to bite with each other, the ribs on the base materials are formed by jumping at different phases. That is, the ribs formed on the separator of the first embodiment is skipped by one at a certain phase, and the rib formed on the gas diffusion layer 4, 5 of the second embodiment is skipped by one at a different phase. Both ribs are pushed against the opposing base materials, and the biting structure is formed accordingly. From the notion of manufacturing, the origin of starting the adhering of the fluid guide path is shifted for the first base material with respect to the second base material and executed so that the fluid guide paths are successfully bitten.

As variation of Fig. 13 (D), the trapezoid shaped cross-sectional rib 11 adhered to both the base materials can be a combination of the left-right asymmetric trapezoid rib in cross-sectional shape 11 and/or rectangular rib in cross-sectional shape 11, shown in Fig. 12, alternatively, these cross-sectional shapes can be a mixture of their inverted types or corner-rounded shapes. Further, the rib's cross-sectional shapes adhered to the both base materials and their channel widths do not need be even, and they can be set unevenly.

The following variation is also conceivable. In Fig. 13 (E), the left-right symmetric trapezoid rib in cross-sectional shape 11 are adhered to the separator 6, 7 in such a way so that the ribs are overlapping with one another. The space available above the overlapped peripheral portion and not contacting the gas diffusion layer 4, 5 function as the channel where the reaction gas flows through. The lower side of periphery of the overlapped portion contacting the separator 6, 7 serves as the base 13.

In Fig. 13 (F), especially, the channel base is formed by using the same dense and highly conductive carbon-based coating material as the fluid guide path rib 11 adhered to the separator 6, 7 (the second base material), which is applied throughout without allowing any space, and then a left-right symmetric trapezoid rib in cross-sectional shape of the fluid guide path rib 11 is formed immediately above the coated base. That is, in the example of Fig. 13 (F), the channel base is formed by coating the separator 6, 7 throughout. Incidentally, in case of forming the base on the channel by performing the coating throughout the gas diffusion layer 4, 5 for the second embodiment, in order to secure a path for diffusing the reaction gas to the gas diffusion layer 4, 5, it is essential that the coating layer to possess the gas-permeable property. The base formation by coating can be applied to the separators 6, 7 for the first, third, fourth and fifth embodiments.

Accordingly, by utilizing the features that can be brought about from the various rib's cross-sectional shapes of the fluid guide path and by using their combinations, the optimal fluid guide path having the excellent features in terms of the reaction gas flow and the gas permeability can be constructed.

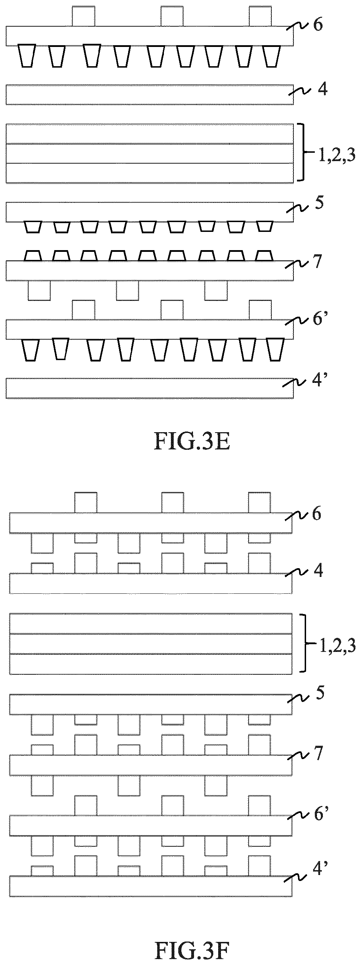

Further, the height h of the gas guide path rib is adjustable to suit the fuel cell specification. For example, the height h of the fluid guide path is not a constant value, the rib height can be varied by setting an irregular value (see Fig. 3 (F)) to it. The rib height h adjustment can be applied to the both base materials.

Based on the technical notion, a tendency is that the manufacturing process of adhering the fluid guide path rib might be easier by uniformly forming the same rib shape to either one of the base materials. That is, it is technically convenient to adhere the gas guide path with the same shape throughout the same base material. However, in order to implement various types of fluid guide path shapes that can be brought about from combining the rib shapes, various rib shapes must be mixed, so that the selection of the fluid guide path structure meeting the needs of the product specification is diversified. Hence, by making the most out of the biting method, the same shape of the gas guide path is adhered within the same first base material and the second base material, but different shapes of fluid guide path are formed on the first base material and the second base material, and as a result of biting them together, as shown in Fig. 14, the fluid guide path structure that alternately arranges different rib shapes is complete. That is, with the biting method of the third embodiment, the fluid guide path structure having employed the mixture of different rib shapes is easily achieved.

Also, as for the head-butting method of the third embodiment, the upper face corresponding to the rib head is flat, and as long as the upper face is within the scope of the same area, as shown in Fig. 15, the fluid guide paths are formed with ribs having different shapes on the first and second base materials, and as a result of putting their upper faces together, a tower-type rib's cross-sectional shape can be implemented, as shown in Fig. 15 (B) (the rectangular rib is formed on the first base material, approximately trapezoid rib is formed on the second base material). Similar to this one, Fig. 15 (A) illustrates a volcano-type rib's cross-sectional shape formed by the head-pushing method of the first embodiment, and this is formed by using a method different from the tower-type rib.

Now, with the fluid guide path shape mentioned in the third embodiment, in regard to the adhering property of the separator 6, 7 and its fluid guide path, and the gas diffusion layer 4, 5 and its fluid guide path, so-called anchor effect is obtained since a part of the rib material of the fluid guide path adhered to the surface of the gas diffusion layer 4, 5 tucks to the gas diffusion layer 4, 5, thereby forming the arc-shaped interface (refer to Fig. 8 (B)). This can disperse the stress being put on the interface, which effectively anchors the ribs. The adhering property of the fluid guide path rib 11 and the gas diffusion layer 4, 5 at the interface is improved.

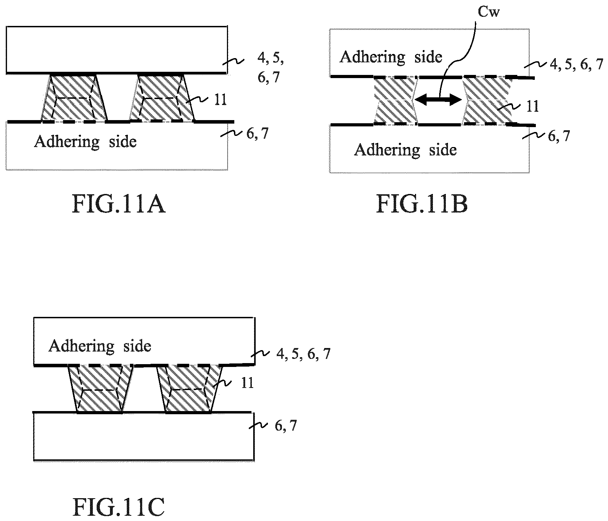

The differences in the channel width Cw for the first to third embodiments will be explained by using Figs. 11 (A), (B), (C). Figs. 11 (A) and (B) illustrate the cross-sectional shape of the gas guide path in case of adhering and printing to either one of the separators 6, 7 or the gas diffusion layer 4, 5, for the above-described first and second embodiments. Fig. 11 (C) illustrates the cross-sectional shape of the gas guide path in case of adhering to both the separator 6, 7 and the gas diffusion layer 4, 5 of the gas guide path shape, for the third embodiment.

If the interface areas of the both ribs 11 of the separator 6, 7 and the gas diffusion layer 4, 5 for the third embodiment are made equivalent to the head-pushing area of the separator 6, 7 of the second embodiment and its fluid guide path rib 11 and the head-pushing area of the gas diffusion layer 4, 5 of the first embodiment and its fluid guide path rib 11, respectively, then the maximum pushing pressure do not change among these three, that is, the separator 6, 7, the rib 11, and the gas diffusion layer 4, 5. The channel's cross-sectional area of the fluid guide path for the third embodiment gets large, and the contact area of the reaction gas flowing the channel and the gas diffusion layer 4, 5 becomes large also. Owing to this, the flow resistance of the fluid guide path shape for the third embodiment (rib formation on both base materials) is lower than that of the flow guide path shape for the first and second embodiments, and the reaction gas flow is facilitated, and the reaction gas diffusing property to the gas diffusion layer 4, 5 gets better. Based on the fact that the reaction gas flow is facilitated and the gas permeability is getting better, the rib height h can be lowered, as a result of this, the thickness of the fuel cell unit is thinned, which will lead us to the elevated output volume density of the fuel cell.

Specifically, if the rib 11 mentioned in the above-described first embodiment and the head-pushing area of the base material (the gas diffusion layer) (corresponds to the portion expressed by a thick line in Fig. 11 (A)), the rib 11 mentioned in the above-described second embodiment and the head-pushing area of the base material (the separator)(corresponds to the portion expressed by a thick line in Fig. 11 (B)), and the interface areas of the base faces of the rib 11 mentioned in the third embodiment and the base material (correspond to the portions expressed by a dotted line in Fig. 11 (C)) are all equal, then the fluid guide path of the third embodiment, as compared with those of the above-mentioned first and second embodiments, has structural characteristic of having an expanded channel width Cw at the center portion while maintaining the strength of the rib 11 at the equivalent compressional pressure.

In the third embodiment, the dense and highly conductive carbon-based coating material of the same kind can be used for adherence as the rib 11 configuring the gas guide path to be adhered to the separator 6, 7 and the rib 11 configuring the fluid guide path to be adhered to the gas diffusion layer 4, 5, or, different materials can be used.

In the third embodiment, the separators 6, 7 adhering the fluid guide path and the gas diffusion layers 4, 5 adhering the fluid guide path are formed separately and then adjoined together, and they are not integrated.

Since the top faces of the ribs adhered to the separator 6, 7 and the gas diffusion layer 4,5 are both flat, the ribs are simply adjoined together. If the ribs are adhered by using adhesives, the adhesive layer may act as a barrier layer to hinder the reaction gas permeating through the rib.

In the third embodiment, regarding the overall pattern of the fluid guide path, the larger the path area, the greater amount of reaction gas will come in contact with the catalyst at once, such that it is conceivable that the high energy output is obtained. Particularly, since the generated water passes through the cathode side, that it is essential to secure the channel width Cw to a certain extent. However, if the channel width Cw is large, the speed of releasing the supplied gas out of the cell is increased. It is important to flow the reaction gas carefully by narrowing the channel width Cw to some extent, alternatively, turns may be installed to the fluid guide path so that the gas supplied are not discharged immediately. The pattern of the fluid guide path is not particularly limited, and it can be designed in the similar manner as the design of the fluid guide path patterns used in the conventional separators. Examples includes a straight type, a serpentine type, a comb type and so forth on.

As described above, the fluid guide path structure pertaining to the third embodiment of the present invention is just an example, and needless to say that it should not be limited to the contents mentioned in the present patent specification.

### Fourth Embodiment

Hereinbelow, the fuel cell having the fluid guide path for the fourth embodiment of the present invention will be described by using Figs. 2 through 4 and Fig. 12. It should be noted that the present invention is not limited to the fourth embodiment.

The above-mentioned first to third embodiments have described the fluid guide path structures provided to the fuel cell unit configured by making the structure of the gas guide path at the anode side the same as the structure on the cathode side. In the fuel cell provided with the gas guide path according to the fourth embodiment of the present invention, as shown in Figs. 3 (D) and (E), the main point of difference is that the anode side gas guide path structure is different from the cathode side gas guide path. Other structures and mechanisms are mostly the same as the first to third embodiments, and the detailed explanations are partially omitted.

The dimensional notation of the fluid guide path and the manufacturing method of the fluid guide path of the present invention are as explained already in the first to third embodiments, and the explanations are omitted herewith.

The fluid guide path structure of the fourth embodiment, as shown in Figs. 3 (D) and (E), are based on the gas guide path shapes described in the first to third embodiments, except that the structure is different at the anode side and the cathode side. As for the fourth embodiment of the present invention, the anode side gas guide path and the cathode side gas guide path do not need to have the same structure.

In the example of Fig. 3 (D), the anode side gas guide path adheres the gas guide path on the surface of the separator 6 facing the gas diffusion layer 4, and the gas guide path is not adhered to the gas diffusion layer 4. The cathode side gas guide path adheres the gas guide path to the surface of the gas diffusion layer 5 facing the separator 7, and the gas guide path is not adhered to the separator 7. In other words, the present invention is applicable even if the gas guide path is not adhered to the same base material, at the anode side and the cathode side. As in Fig. 3 (D), the anode side gas guide path is adhered to the separator 6 only, and the cathode side gas guide path is adhered to the gas diffusion layer 5 only. Alternatively, such combination can be reversed for implementation.

In the example of Fig. 3 (E), the anode side gas guide path is adhered to the surface of the separator 6 facing the gas diffusion layer 4, and the gas guide path is not adhered to the gas diffusion layer 4 facing the separator 6. The cathode side gas guide path is adhered to the surface of the gas diffusion layer 5 facing the separator 7, and the gas guide path is also adhered to the separator 7 facing the gas diffusion layer 5. In other words, at the anode side, the gas guide path is adhered only to one of the sides of one of the base materials, as in the first embodiment, and at the cathode side, the gas guide path is adhered to both the base materials, as in the third embodiment. The combination can be reversed for implementation. This example is the combination of the first embodiment and the third embodiment.

That is, as described in the example above, the anode side gas guide path structure and the cathode side gas guide path structure do not need to be the same.

The combination of the rib's cross-sectional shapes described in the first to third embodiments, and the number of ribs included in the fluid guide path of the present invention, can be determined on the basis of the most desirable configuration in compliance to the product specification, the structural components of product, and their functions. Other than the rib's cross-sectional shape, lots of variations are possible by applying the combination of rib materials, the additional elements and so forth. Their effects are ideally the same as the purpose of the present invention. In terms of manufacturing the product matching the purpose of the present invention, studying of most suitable variation to the product specification would be useful in examining the peculiar characteristics and effects that can be observed in the combined examples of various shapes and elements.

Referring to the fluid guide path pertaining to the fourth embodiment, for example, three variations of the fluid guide path shapes shown in Figs. 4 can be applied. Of course, the shape of the 3 fluid guide paths mentioned in the present patent specification is the typical example, and the present invention is not restricted by the fourth embodiment. Various modification and application of the present invention are possible without deviating from its purport. As one example of the fluid guide path rib 11 mentioned in the fourth embodiment, the left-right symmetric rib's cross-sectional shape shown in the column A of Fig. 12 can be applied, as well as the left-right asymmetric rib's cross-sectional shapes shown in the columns B, C of Figs. 12 can be applied. Also, as shown in Figs. 12, the inverted type of the left-right symmetric and the left-right asymmetric rib's cross-sectional shapes can be applied. Further, these rib's cross-sectional shapes can be made to have arched corners to make the corner-rounded shapes, or their combinations can be applied.

In the fourth embodiment, the dense and highly conductive carbon-based coating material of the same kind can be used and adhered as the rib 11 configuring the fluid guide path adhered to the separator 6, 7 and the rib 11 configuring the fluid guide path adhered to the gas diffusion layer 4, 5, or, different materials can be used.

In the fourth embodiment, the separators 6, 7 adhering the fluid guide path and the gas diffusion layer 4, 5 adhering the fluid guide path, are formed separately and then adjoined together, and they are not integrated.

Referring to the fourth embodiment, the pattern of the fluid guide path is not particularly limited, and it can be designed in the similar way as the fluid guide path pattern formed in the conventional separator. Examples include a straight type, a serpentine type, a comb type and so forth on.

As described above, the fluid guide path structure pertaining to the fourth embodiment of the present invention is just an example, and needless to say that it should not be limited to the contents mentioned in the present patent specification.

### Fifth Embodiment

Hereinbelow, the fuel cell having the fluid guide path for the fifth embodiment of the present invention will be described by using Figs. 2 to 4 (C) and Fig. 12. It should be noted that the present invention is not limited to the fifth embodiment.

The above-mentioned first to fourth embodiments have described the examples of which the fluid guide path rib heights are all identical. In the fuel cell provided with the fluid guide path according to the fifth embodiment of the present invention, as shown in Fig. 3 (F), the main point of difference is that the fluid guide path ribs have different heights depending on the rib heights h of the opposing ribs. Other structures and mechanisms are mostly the same as the first to fourth embodiments, and their explanations are partially omitted.

The dimensional notation of the fluid guide path and the manufacturing method of the fluid guide path of the present invention are already explained in the first to fourth embodiments and are omitted herewith.

In the fifth embodiment, as shown in Fig. 3 (F), at the anode side and the cathode side, similar to the third embodiment, the fluid guide path ribs are formed on both surfaces of the separator and the gas diffusion layer. So, the characteristics of the fifth embodiment is that the path rib heights h of these fluid guide paths are freely adjusted depending on the height of the facing ribs (for example, given that the total height is 1, then the rib height h adhered to the separator 6, 7 is set to 0.7, and the opposing rib height h adhered to the gas diffusion layer 4, 5 is set to 0.3). The varied path rib heights h of the fluid guide paths formed accordingly can be periodic (alternately varied depending on the neighboring rib) or can be set irregularly (varied on a plurality of ribs). The above example is merely an example, and the reversed combination likewise is also possible.

Referring to the fluid guide path mentioned in the fifth embodiment, for example, three variations of the fluid guide path shapes shown in Figs. 4 (A), (B), (C) can be applied. Of course, the shape of the 3 fluid guide paths mentioned in the present patent specification is the typical example, and the present invention is not restricted by the fifth embodiment. Various modification and application of the present invention are possible without deviating from its purport. According to the fluid guide path rib 11 mentioned in the fifth embodiment, the left-right symmetric rib's cross-sectional shape shown in the column A of Fig. 12 can be applied, as well as the left-right asymmetric rib's cross-sectional shapes shown in the columns B and C Figs. 12 can be applied. Also, as shown in Fig. 12, the inverted type of the left-right symmetric and the left-right asymmetric rib's cross-sectional shapes can be applied. Further, these rib's cross-sectional shape can be made to have arched corners to make the corner-rounded shapes, or their combinations can be applied.

In the fifth embodiment, the dense and highly conductive carbon-based coating material of the same kind can be used for adherence as the rib 11 configuring the fluid guide path adhered to the separator 6, 7 and the rib 11 configuring the fluid guide path adhered to the gas diffusion layer 4, 5, or, different materials can be used.

In the fifth embodiment, the separators 6, 7 to which the fluid guide path is adhered, and the gas diffusion layers 4, 5 to which the fluid guide path is adhered, are formed separately and then adjoined together, and they are not integrated.

Referring to the fifth embodiment, the pattern of the fluid guide path is not particularly limited, and it can be designed in the similar way as the fluid guide path pattern formed in the conventional separator. Examples include a straight type, a serpentine type, a comb type and so forth on.

The fluid guide path structure of the fifth embodiment is based on the head-butting method described in the third embodiment, and it can be made to have different structures at the anode side gas guide path and the cathode side gas guide path as described in the fourth embodiment, as well, the fluid guide path structures are implemented by forming the ribs having different heights.

As described above, the fluid guide path structure pertaining to the fifth embodiment of the present invention is just an example, and needless to say that it should not be limited to the contents mentioned in the present patent specification.

The examples mentioned in the first to fifth embodiments explain the independent structures, respectively. The first to fifth embodiments can be implemented in combination.

### Other Modification 1

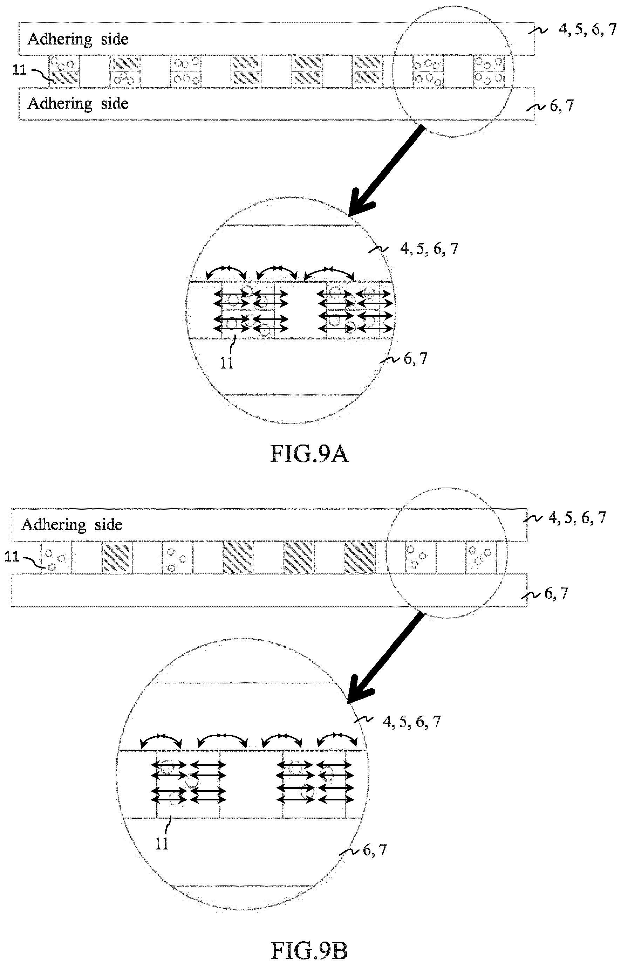

Next, the fuel cell applying the other modification 1 of the present invention is described by using Figs. 9 (A) and (B).

The above-mentioned first to fifth embodiments describing the examples for which the fluid guide path ribs formed on the surfaces of base materials in various ways are explained as that they all are nonporous in structure.

In the fuel cell provided with the fluid guide path according to the other modification 1, as shown in Figs. 9 (A) and (B), the main point of difference is that the minute holes are installed to the gas guide path rib 11 and the cooling medium path rib 11 for the first to fifth embodiments. Other structures and mechanisms are basically the same as the first through fifth embodiments.

If the interface area of the gas diffusion layers 4, 5 and the ribs 11 adhered to these surfaces gets large, then the channel width Cw gets small, and the reaction gas diffusing to the gas diffusion layer 4, 5 is restricted. Thus, minutes holes are installed to the gas guide path rib 11 of various shapes pertaining to the above-described first to fifth embodiments, so that the permeability of reaction gas is improved, the pressure difference between the channels can be adjusted, the gas supply and exhaust flows are maintained in equilibrium, and the generated water can be discharged.

Fig. 9 (A) illustrates the rib 11 configuring the gas guide path adhered to the separator surface, the rib 11 configuring the fluid guide path adhered to the gas diffusion layer surface, and the rib 11 configuring the cooling medium path adhered to the separator surfaces, that are formed by using the same material or the different materials, and the minute holes are installed to the respective ribs (represented by white holes in Fig. 9). Fig. 9 (B) and (C) illustrates the fluid guide path rib 11 configuring the fluid guide path adhered to the surface of separator 6, 7 and/or the gas guide path rib 11 adhered to the surface of gas diffusion layer 4, 5, and the minute holes are installed to the respective ribs. As shown by the arrows that transverse the ribs of Figs. 2 and 9 (A), (B), the reaction gas permeates the side face of the rib (located at the both face of the channel), via the rib installed at the gas diffusion layer side, and diffused into the main body of the gas diffusion layer. Henceforth, the reaction gas is diffusing to the main body of the gas diffusion layer intermittently. Also, since the reaction gas permeates the side face of the rib (located at the both faces of the channel), the pressure difference between the channels is adjusted, the state of equilibrium for the supply and exhaust flows of the reaction gas is maintained, and the generated water can be discharged.

The separators 6, 7 to which the fluid guide paths are adhered, and the gas diffusion layer 4, 5 to which the fluid guide paths are adhered, are formed separately and then adjoined together, and they are not integrated.

As shown in Fig. 9 (A), in the other modification 1, since the top faces of the ribs adhered to the separator 6, 7 and the gas diffusion layer 4, 5 are both flat, the both of the top faces of the ribs are simply adjoined. If the ribs are adhered by using adhesives, the adhesive layer may act as a barrier layer to hinder the reaction gas permeating through the rib.

Also, the dense and highly conductive carbon-based coating material of the same kind is used and adhered as the rib 11 configuring the fluid guide path adhered to the separator 6, 7 and the rib 11 configuring the fluid guide path adhered to the gas diffusion layer 4, 5, or, different materials can be used.

Further, the pattern of the fluid guide path is not particularly limited, and it can be designed in the similar manner as the fluid guide path patterns used in the conventional separators. Examples includes a straight type, a serpentine type, a comb type and so forth on.

Furthermore, the minute rib holes, as shown in Figs. 9 (A), (B), can be installed only on the fluid guide path rib 11 of the separator side, or they may be installed only on the fluid guide path rib 11 of the gas diffusion layer side, or they may be installed to both. Alternatively, they may be installed locally or selectively, however, it is preferable that the minute holes are installed throughout. Many variations are conceivable under the implementable configuration.

As described above, the fluid guide path structure pertaining to the other modification 1 of the present invention is just an example, and needless to say that it should not be limited to the contents mentioned in the present patent specification.

The examples mentioned in the first to fifth embodiments explain the independent structures, respectively. The first to fifth embodiments and the other modification 1 can be implemented in combination.

### Effects of the Invention

The first to fifth embodiments and the other modification 1 of the present invention, as described above, the rib shape 11 of the fluid guide path including the gas guide path and the cooling medium path, can be flexibly formed on the surfaces of the first base material (the gas diffusion layer) and the second base material (the separator) by using the 2-dimensional method, and can be implemented at any combinations of various rib shapes 11, so that the following effectiveness described below is achievable.

Conventionally, the die and mold were needed for forming the separator made of metal processed body. Once the mold is formed, the design change is not easy since it is time-consuming and costly. The die and mold will no longer be required if the fluid guide path of the present invention that is made under the process of printing, spraying, coating, dispensing, and transferring is used. Change in path design is facilitated for meeting the product features. Also, since the ready-made gas diffusion layer can be employed, therefore, one is able to suppress costs involved, such as material and design changes and re-development of the gas diffusion layer 4, 5 incurred for every integration of fuel cell design specification. As for printing, spraying, coating, dispensing, and transferring materials, the dense and high porosity high conductive carbon type material that can be produced in large quantity using inexpensive materials is used, therefore, one is able to comply with applicability to mass production by adhering the gas guide path to the pre-existing separator and gas diffusion layer having high porosity and excellent moisturizing property.

On the other hand, since the fluid guide path(s) is/are adhered to the surface of separator 6, 7 and/or the surface of gas diffusion layer 4, 5, therefore, the process of metallic processing is no longer needed to form the fluid guide path on the separator 6, 7 which is used together with the gas diffusion layer 4, 5. A thin separator having a smooth surface can be used. By controlling the height of the rib material for adherence and employing an extremely thin separator, a small-sized high-volume output fuel cell can be produced in a large quantity. Further, by adhering rib 11 which forms the path on the gas diffusion layer surface having high porosity and on the flat separator surface, the internal stress put on the separator 6, 7, the rib 11, and the gas diffusion 4, 5 can be minimized, the rib interface adhering property is high, and the reliability and lifetime of the fuel cell is effectively improved. By installing minute holes to the rib 11, the reaction gas permeability is improved, the pressure put on the channels are adjusted, and the equilibrium of reaction gas flow is maintained, and the high current density fuel cell is obtainable.

Now, the present invention is not limited to the above-mentioned embodiments. Various other modifications can be incorporated to the present invention at the scope conceivable by a person having ordinary skill in the art, and within the scope of the claims for which the various modifications are implemented without deviating from the purport.

### Industrial Applicability

The embodiments of the present invention can be utilized as the fuel cell for vehicle.

The present invention is not limited to the first and fifth embodiments and the other modification 1 described above, and it can be realized under various structures within the scope not deviating from the purport. For example, the technical features mentioned in the first to fifth embodiments and the other modification 1 in the description of the present invention, can appropriately be replaced or combined for solving all or part of the issues and effects mentioned above.

## Claims

1. A fuel cell unit of the fuel cell having a plurality of fuel cell units, comprising:
a first separator and a second separator that are opposing to each other; and
a membrane electrode assembly stacked between the first and the second separators;
wherein the electrode membrane assembly includes a catalyst coated membrane, a first gas diffusion layer and a second gas diffusion layer respectively provided to a first side and a second side of the catalyst coated membrane;
the fuel cell unit further comprises a gas guide path between the first separator and the first gas diffusion layer and/or between the second separator and the second gas diffusion layer;
wherein the gas guide path is adhered to a surface of the gas diffusion layer facing the corresponding separator and/or adhered to a surface of the separator facing the corresponding gas diffusion layer, for forming the fluid guide path; and
the fuel cell comprises a cooling medium path located between the first separator of the adjacent fuel cell unit and the separator;
wherein the cooling medium path is adhered to a surface of the second separator facing the first separator and/or a surface of the first separator facing the second separator, for forming the fluid guide path.

2. The fuel cell according to claim 1, wherein the cooling medium path is adhered to the outer surface of the first separator and/or the second separator, wherein the gas guide path is adhered to the inner surface of the first separator and/or the second separator.

3. The fuel cell according to claim 1, wherein the cooling medium path is adhered to the outer surface of the first separator and/or the second separator, wherein the gas guide path is not adhered to the inner surface of the first separator and/or the second separator.

4. The fuel cell according to claim 1, wherein the cooling medium path is adhered to the outer surface of the first separator and/or the second separator, wherein the gas guide path is adhered to the surface of the gas diffusion layer corresponding to the inner surface of the first separator and/or the second separator.

5. The fuel cell according to claim 1, wherein the fluid guide path is formed on the corresponding separator surface and/or the gas diffusion layer surface, by using an adhering method, a printing method, a dispensing method, an injecting method, and a transferring method.

6. The fuel cell according to claim 1, wherein the separator surface(s) and/or the gas diffusion layer surface(s) for adhering the fluid guide path(s) are/is smooth.

7. The fuel cell according to claim 1, wherein the fluid guide path is respectively formed on the separator and the gas diffusion layer.

8. The fuel cell according to claim 1, wherein the fluid guide path is made of a material different for the separator and/or the gas diffusion layer.

9. The fuel cell according to claim 1, wherein the fluid guide path material is a highly conductive material.

10. The fuel cell according to claim 1, wherein the gas guide path includes a rib portion and a channel portion, for controlling the reaction fluid flows and the fluid permeability.

11. The fuel cell according to claim 10, wherein the rib portion of the gas guide path includes a dense structure for hindering the permeation of the reaction fluid between the adjacent channel portions and the permeation of the reaction fluid to the corresponding gas diffusion layer via the rib portion, or, a high porosity structure for allowing permeation of the reaction gas between the adjacent channel portions and the permeation of the reaction fluid to the corresponding gas diffusion layer via the rib portion.

12. The fuel cell according to claim 10, wherein the gas guide path further includes a base portion carrying the rib portion, wherein the base portion has a dense structure for hindering the permeation of the reaction fluid to the corresponding gas diffusion layer via the base portion, or, a high porosity structure for allowing the permeation of the reaction fluid to the corresponding gas diffusion layer via the base portion.

13. The fuel cell according to claim 10, wherein the rib portion of the gas guide path is formed on either one of the opposing surfaces of the separator or the gas diffusion layer, the upper faces of the some of the rib portion come in contact with the other one of the opposing surfaces of the separator or the gas diffusion layer, and the upper faces of some other rib portion is provided with a space between the other one of the opposing surfaces of the separator or the gas diffusion layer.

14. The fuel cell according to claim 1, wherein the rib portion of the gas guide path is formed on either one of the opposing surfaces of the separator or the gas diffusion layer, and the upper face of the rib portion comes in contact with the other one of the opposing surfaces of the separator or the gas diffusion layer, and wherein the rib portion of the cooling medium path is formed on either one of the opposing surfaces of the first separator or the second separator, and the upper face of the rib portion come in contact with the other one of the opposing surfaces of the separator.

15. The fuel cell according to claim 1, wherein the rib portion of the gas guide path is formed on the opposing surfaces of the separator and the gas diffusion layer, and the upper faces of the rib portions corresponding to the opposing separator and the gas diffusion layer are adjoined; and wherein the rib portion of the cooling medium path is formed on the opposing surfaces of the first separator and second separator, and the upper faces of the rib portions corresponding to the opposing first separator and the second the second separator are adjoined.

16. The fuel cell according to claim 1, wherein the gas guide path ribs are formed on the opposing surfaces of the separator and the gas diffusion layer, and, the rib portion on the separator comes in contact with the surface of the gas diffusion layer, and the rib portion on the gas diffusion layer comes in contact with the surface of the separator; and wherein the cooling medium path ribs are formed on the opposing surfaces of the first separator and the second separator, and, the rib portion on the first separator comes in contact with the surface of the second separator, and the rib portion of the second separator comes in contact with the surface of the first separator.

17. The fuel cell according to claim 15, wherein the adjoined rib portions in pairs have the adjoined interface size which is less than the contact face of the rib portion with the separator or the gas diffusion layer.

18. The fuel cell according to claim 15, wherein the adjoined rib portions in pairs have the adjoined interface size which is greater than the size of contacting face of the rib portion with the separator or the gas diffusion layer.

19. The fuel cell according to claim 10, wherein the material of the rib portion is tucked into the interface of the gas diffusion layer.

20. The fuel cell according to claim 12, wherein the rib portion and the base portion of the gas guide path are formed by the adhering method throughout.

21. The fuel cell according to claim 10, wherein the upper face of the rib of the fluid guide path and a part or all surface of the channel base are processed to have the hydrophilic property.

22. A manufacturing method of the fuel cell unit for forming a cooling medium path and a gas guide path by using an electrode membrane assembly including a catalyst coated membrane, a first gas diffusion layer and a second gas diffusion layer respectively provided to a first side and a second side of the catalyst coated membrane, and by using a first separator and a second separator, comprising the steps of:
the cooling medium path which is formed by adhering the cooling medium path rib to the outer surface of the first separator and the second separator; and
contacting the cooling medium path rib adhered to the first separator and/or the second separator to the surface of the second separator and/or surface of the first separator of the adjacent fuel cell unit; and
the gas guide path which is formed by adhering the gas guide path rib to the inner surface of the first gas diffusion layer and/or the second gas diffusion layer;
adhering the gas guide path rib to the inner surface of the first separator and/or the second separator;
pressing the first separator to the outer surface of the first gas diffusion layer; and
pressing the second separator to the outer surface of the second gas diffusion layer.

23. The manufacturing method of fuel cell unit according to claim 22, for forming the cooling medium path and the gas guide path on the corresponding separator surface and/or the gas diffusion layer surface by using the adhering method, the printing method, the dispensing method, the spraying method or the transferring method.

24. The manufacturing method of fuel cell unit according to claim 22, for smoothing the separator surface and/or the gas diffusion layer surface(s) to adhere the cooling medium path and the gas guide path.

25. The manufacturing method of fuel cell unit according to claim 22, wherein the cooling medium path material and the gas guide path material are different for the separator and/or the gas diffusion layer.

26. The manufacturing method of fuel cell unit according to claim 22, wherein the cooling medium path and the gas guide path are made from materials having high conductivity.

27. The manufacturing method of fuel cell unit according to claim 22, wherein the cooling medium path and the gas guide path include the rib portion and the channel portion for controlling the reaction fluid flow and the fluid permeability.

28. The manufacturing method of fuel cell unit according to claim 27, wherein the gas guide path includes a base portion carrying the rib portion.

29. The manufacturing method of fuel cell unit according to claim 28, for forming the rib portion and the rib base of the gas guide path by the adhering method throughout.

30. The manufacturing method of fuel cell unit according to claim 28, wherein the manufacturing method includes a hydrophilic processing applied to the upper face of the rib portion of the gas guide path and a part or all the surface of the channel base portion of the fluid guide path.
